# EUROPEAN PATENT SPECIFICATION

(11) **EP 4 454 307 B1**
(45) Date of publication and mention of the grant of the patent: **08.07.2026**
(21) Application number: 22813386.4
(22) Date of filing: 25.10.2022
(51) Int. Cl.: H04W 4/50, H04W 88/06, H04W 24/02, H04W 24/08

(54) **DEPLOYMENT-BASED STATISTICS FOR MODIFICATIONS TO WIRELESS COMMUNICATIONS**
EINSATZBASIERTE STATISTIKEN FÜR ÄNDERUNGEN AN DRAHTLOSEN KOMMUNIKATIONEN
STATISTIQUES BASÉES SUR LE DÉPLOIEMENT POUR DES MODIFICATIONS APPORTÉES À DES COMMUNICATIONS SANS FIL

(30) Priority: 23.12.2021 IN 202141060198
(43) Date of publication of application: 30.10.2024
(73) Proprietor: Qualcomm Incorporated, San Diego, CA 92121-1714 (US)
(72) Inventor: RANJAN, Sharda, San Diego, CA 92121-1714 (US); CHIN, Tom, San Diego, CA 92121-1714 (US); GUDIVADA, Naga, Chandan, Babu, San Diego, CA 92121-1714 (US)
(74) Representative: Tomkins & Co
(86) International application number: PCT/US2022/078653
(87) International publication number: WO 2023/122376

(56) References cited:
- US-A1- 2013 132 854
- US-A1- 2013 132 854
- US-A1- 2020 351 792
- US-A1- 2020 351 792
- US-A1- 2021 105 046
- US-A1- 2021 105 046

## Description

### FIELD OF TECHNOLOGY

The following relates to wireless communications, including deployment-based statistics for modifications to wireless communications.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In some deployment scenarios, a UE may be capable of communicating in accordance with various radio access technologies (RATs).

US2020/351792 A1 describes methods, systems, and devices for wireless communication in a multi-connectivity user equipment (UE). The UE may communicate with one or more base stations via a first radio access technology (RAT). The UE may determine whether the UE is in a selected state. The selected state may correspond to one or more modes of operation (e.g., a doze mode, a relaxed doze mode, an active WiFi communication mode, a low battery mode). The UE may disable communication via a second RAT in response to determining that the UE is in the selected state. The UE may continue to communicate via the first RAT.

US2013/132584A1 discloses methods, systems, and apparatuses to enable subscribers of mobile wireless communication devices to view, research, select and customize service plans; to create and manage device groups, share and set permission controls for service plans among devices in device groups; to manage communication services through graphical user interfaces; to sponsor and promote service plans; and to design, manage, and control communication services through application programming interfaces.

US2021/105046 A1 discloses a wireless device may receive, using a first receive port, a first signal within a first frequency band, where the first receive port may be associated with a first receive beam. The wireless device may also receive, using a second receive port, a second signal within the first frequency band concurrently with receiving the first signal, where the second receive port may be associated with a second receive beam. After receiving the first and second signals, the wireless device may process both signals. Processing the signals may include decoding both of the signals, measuring both of the signals, and/or decoding one of the signals and measuring the other of the signals. To support concurrent reception over multiple receive beams within a single frequency band, the wireless device may employ an idle antenna panel and corresponding receive ports.

### SUMMARY

The invention is described herein with reference to the appended claims. The described techniques relate to improved methods, systems, devices, and apparatuses that support deployment-based statistics for modifications to wireless communications. Generally, the techniques described herein enable various types of users to access relevant information relating to performance of a user equipment (UE) across one or more communication modes or radio access technologies (RATs). A type or granularity of the information that the UE provides to the user may depend on a type of the user. For example, if the UE detects that a user is a first user type, the UE may provide the user with relatively simpler or more basic information relating to UE performance. Alternatively, if the UE detects that a user is a second user type, the UE may provide the user with relatively more technical or granular information relating to UE performance. In some implementations, a user may select between different operational modes or configurations of the UE based on the information or the UE may provide use-related suggestions to the user based on the information, or both, via a user-interface of the UE. Further, in some implementations, the UE may update one or more network parameters in accordance with information or performance statistics, or both, associated with an application of the UE without (solely) relying on additional signaling with a network entity.

A method for wireless communication at a UE is described. The method may include obtaining, from a modem of the UE, statistics associated with a deployment of the UE in a system supporting at least a first RAT, the statistics associated with a service provided from at least the first RAT, and the provided service based on the deployment of the UE, signaling, to an application of the UE, information associated with the statistics, and modifying communications at the UE based on the statistics and the application of the UE.

An apparatus for wireless communication at a UE is described. The apparatus may include a processor, memory coupled with the processor, and instructions stored in the memory. The instructions may be executable by the processor to cause the apparatus to obtain, from a modem of the UE, statistics associated with a deployment of the UE in a system supporting at least a first RAT, the statistics associated with a service provided from at least the first RAT, and the provided service based on the deployment of the UE, signal, to an application of the UE, information associated with the statistics, and modify communications at the UE based on the statistics and the application of the UE.

Another apparatus for wireless communication at a UE is described. The apparatus may include means for obtaining, from a modem of the UE, statistics associated with a deployment of the UE in a system supporting at least a first RAT, the statistics associated with a service provided from at least the first RAT, and the provided service based on the deployment of the UE, means for signaling, to an application of the UE, information associated with the statistics, and means for modifying communications at the UE based on the statistics and the application of the UE.

A non-transitory computer-readable medium storing code for wireless communication at a UE is described. The code may include instructions executable by a processor to obtain, from a modem of the UE, statistics associated with a deployment of the UE in a system supporting at least a first RAT, the statistics associated with a service provided from at least the first RAT, and the provided service based on the deployment of the UE, signal, to an application of the UE, information associated with the statistics, and modify communications at the UE based on the statistics and the application of the UE.

Some examples of the method, apparatuses, and non-transitory computer-readable medium described herein may further include operations, features, means, or instructions for receiving, via an interface of the UE, an indication of a type of user of the UE and presenting, to the user via the interface, a subset of the information associated with the statistics based on the type of the user.

In some examples of the method, apparatuses, and non-transitory computer-readable medium described herein, presenting the subset of the information may include operations, features, means, or instructions for presenting a duration of the service provided from the first RAT, a quantity of service interruptions associated with the service provided from the first RAT, a battery usage associated with the service provided from the first RAT, an indication of an antenna blockage at the UE, or any combination thereof.

Some examples of the method, apparatuses, and non-transitory computer-readable medium described herein may further include operations, features, means, or instructions for presenting, to the user via the interface, a selection option between two or more communication modes of the UE based on the subset of the information and receiving, from the user via the interface, an indication of a selection between the two or more communication modes, where modifying the communications at the UE may be based on receiving the indication of the selection.

In some examples of the method, apparatuses, and non-transitory computer-readable medium described herein, the two or more communication modes include a standalone communication mode and a non-standalone communication mode, or a first RAT mode and a second RAT mode, or a communication mode associated with a first radio frequency band and a communication mode associated with a second radio frequency band, or any combination thereof.

Some examples of the method, apparatuses, and non-transitory computer-readable medium described herein may further include operations, features, means, or instructions for presenting, to the user via the interface, a recommendation associated with the antenna blockage at the UE and increasing a quantity of spatial layers for one or both of transmission and reception based on the recommendation, where modifying the communications at the UE may be based on increasing the quantity of spatial layers.

In some examples of the method, apparatuses, and non-transitory computer-readable medium described herein, the recommendation includes an indication for the user to remove a case from the UE or to change a hand position on the UE.

Some examples of the method, apparatuses, and non-transitory computer-readable medium described herein may further include operations, features, means, or instructions for detecting the antenna blockage at the UE based on one or both of the UE using below a threshold quantity of spatial layers for a threshold time duration and detecting a threshold quantity of service interruptions during a time window associated with a channel condition satisfying a threshold channel condition.

In some examples of the method, apparatuses, and non-transitory computer-readable medium described herein, presenting the subset of the information may include operations, features, means, or instructions for presenting cell-level information, beam-level information, multiple-input multiple-output (MIMO) configuration information, carrier aggregation information, bandwidth information, battery usage information, or any combination thereof.

Some examples of the method, apparatuses, and non-transitory computer-readable medium described herein may further include operations, features, means, or instructions for presenting, to the user via the interface, a selection option between different cells or beams based on the subset of the information and receiving, from the user via the interface of the UE, an indication of a selection between the different cells or beams, where modifying the communications at the UE may be based on receiving the indication of the selection.

Some examples of the method, apparatuses, and non-transitory computer-readable medium described herein may further include operations, features, means, or instructions for presenting, to the user via the interface of the UE, a selection option between different MIMO configurations based on the subset of the information and receiving, from the user via the interface of the UE, an indication of a selection between the different MIMO configurations, where modifying the communications at the UE may be based on receiving the indication of the selection.

Some examples of the method, apparatuses, and non-transitory computer-readable medium described herein may further include operations, features, means, or instructions for presenting, to the user via the interface of the UE, an option to overwrite a network parameter based on the subset of the information and receiving, from the user via the interface of the UE, a new value for the network parameter, where modifying the communications at the UE may be based on receiving the new value for the network parameter.

Some examples of the method, apparatuses, and non-transitory computer-readable medium described herein may further include operations, features, means, or instructions for receiving, from a network entity, one or more network parameters and updating, for the application of the UE, a value for at least one of the one or more network parameters based on the information associated with the statistics and the application of the UE, where modifying the communications at the UE may be based on updating the value for the at least one of the one or more network parameters.

Some examples of the method, apparatuses, and non-transitory computer-readable medium described herein may further include operations, features, means, or instructions for updating the value for the at least one of the one or more network parameters may be further based on one or both of an activity mode of the application and a traffic activity of the application.

In some examples of the method, apparatuses, and non-transitory computer-readable medium described herein, the one or more network parameters include packet data protocol (PDP) or radio link control (RLC) acknowledged mode (AM) parameters.

Some examples of the method, apparatuses, and non-transitory computer-readable medium described herein may further include operations, features, means, or instructions for detecting, at the application of the UE, a correlation between the statistics and a software build of the UE based on the information associated with the statistics and signaling an indication of the correlation.

In some examples of the method, apparatuses, and non-transitory computer-readable medium described herein, detecting the correlation may include operations, features, means, or instructions for detecting a pattern of statistics that fail to satisfy one or more performance thresholds during time windows associated with a channel condition that satisfies a threshold channel condition and correlating the pattern with the software build of the UE.

In some examples of the method, apparatuses, and non-transitory computer-readable medium described herein, signaling the indication of the correlation may include operations, features, means, or instructions for presenting, to a user of the UE via an interface of the UE, the indication of the correlation and transmitting, to a network entity, the indication of the correlation.

Some examples of the method, apparatuses, and non-transitory computer-readable medium described herein may further include operations, features, means, or instructions for building the information at a higher layer of the UE relative to a layer associated with the modem of the UE, where signaling the information associated with the statistics to the application of the UE may be based on building the information at the higher layer of the UE.

In some examples of the method, apparatuses, and non-transitory computer-readable medium described herein, the first RAT includes a Fifth Generation (5G) RAT and the provided service may be associated with a 5G service.

### BRIEF DESCRIPTION OF THE DRAWINGS

FIG. 1 shows an example of a wireless communications system that supports deployment-based statistics for modifications to wireless communications in accordance with aspects of the present disclosure.
FIG. 2 shows an example of device hardware that supports deployment-based statistics for modifications to wireless communications in accordance with aspects of the present disclosure.
FIGs. 3 through 8 show examples of user interfaces that support deployment-based statistics for modifications to wireless communications in accordance with aspects of the present disclosure.
FIG. 9 shows an example of a parameter refinement process that supports deployment-based statistics for modifications to wireless communications in accordance with aspects of the present disclosure.
FIGs. 10 and 11 show block diagrams of devices that support deployment-based statistics for modifications to wireless communications in accordance with aspects of the present disclosure.
FIG. 12 shows a block diagram of a communications manager that supports deployment-based statistics for modifications to wireless communications in accordance with aspects of the present disclosure.
FIG. 13 shows a diagram of a system including a device that supports deployment-based statistics for modifications to wireless communications in accordance with aspects of the present disclosure.
FIGs. 14 and 15 show flowcharts illustrating methods that support deployment-based statistics for modifications to wireless communications in accordance with aspects of the present disclosure.

### DETAILED DESCRIPTION

In some systems, such as Fifth Generation (5G) systems or other communications systems employing the use of relatively high frequency bands, a device may suffer from performance degradation as a result of signal propagation losses or blockages. For example, some system deployments (e.g., 5G system deployments) may support communication over relatively high frequency bands, such as an FR2 radio frequency band (e.g., ranging from approximately 24.25 GHz to approximately 52.6 GHz) or a millimeter wave (mmW) radio frequency band (e.g., ranging from approximately 24 GHz to approximately 100 GHz), and communication over such radio frequency bands may be especially susceptible to path loss or other signal propagation losses and may be easily blocked or interrupted due to a user's hand placement or the presence of environmental objects or factors (e.g., rain or foliage). In such system deployments, a network entity (e.g., a base station) and a user equipment (UE) may support signaling mechanisms and parameter configurations to reduce the adverse impacts associated with signal propagation losses or blockages, but sometimes such signaling mechanisms and parameter configurations may still fail to provide a suitable performance level for an end user of the UE.

In some implementations of the present disclosure, a UE may access performance statistics tracked by a modem of the UE and may aggregate the performance statistics at a higher layer of the UE to facilitate a use of the performance statistics for modifying communications at the UE. For example, the UE may signal information relating to the performance statistics to an application of the UE to enable a selection of a configuration of the UE by an end user or by an algorithm at an application layer of the UE. In some examples, for instance, the UE may present one or more performance statistics to an end user via a user interface of the UE and enable the end user to select a configuration of the UE based on the presented performance statistics. Additionally or alternatively, the UE may present a use-related suggestion (e.g., suggest a hand placement change) to the end user based on the performance statistics. A type or granularity of information related to the performance statistics that the UE presents to the end user may depend on a type of the end user (which the end user may indicate via a selection at the UE). In some other examples, the UE may update one or more network parameters via a function that accounts for application-specific information and performance statistics related to the deployment of the UE, which may enable a fine-tuning of network-configured parameters at the UE without additional signaling between the UE and the network.

Particular implementations of the subject matter described in this disclosure can be implemented to realize one or more of the following potential advantages. For example, as a result of implementing the described techniques, an end user may achieve or otherwise experience improved performance of the UE without relying solely on signaling mechanisms (e.g., 5G signaling mechanisms). Further, the described techniques may provide for reduced hardware, software, or firmware complexity and, as a result of such a reduction in complexity and an improving of UE performance in a system (e.g., a 5G system), greater mobility of the UE. Moreover, as a result of supporting lower complexity, improved performance, and greater mobility, the UE may experience greater spectral efficiency, higher data rates, and increased system capacity, among other benefits. An end user may likewise experience improved user experience and a value add in accordance with the various supported techniques and user interfaces.

Aspects of the disclosure are initially described in the context of wireless communications systems. Aspects of the disclosure are additionally illustrated by and described with reference to device hardware, user interfaces, and a parameter refinement procedure. Aspects of the disclosure are further illustrated by and described with reference to apparatus diagrams, system diagrams, and flowcharts that relate to deployment-based statistics for modifications to wireless communications.

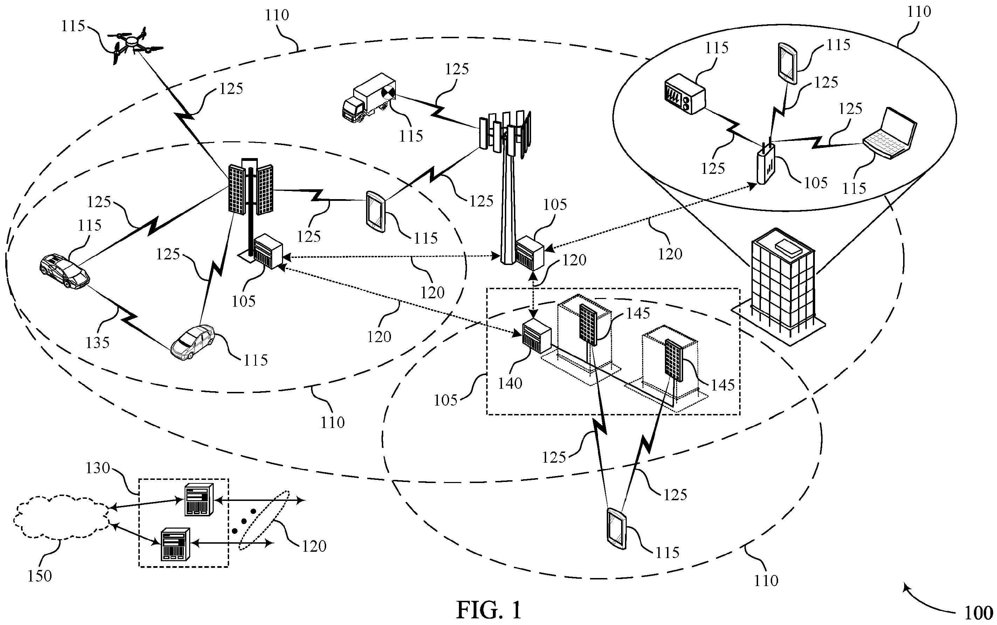

**FIG. 1** shows an example of a wireless communications system 100 that supports deployment-based statistics for modifications to wireless communications in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

In some examples, one or more components of the wireless communications system 100 may operate as or be referred to as a network node. As used herein, a network node may refer to any UE 115, base station 105, entity of a core network 130, apparatus, device, or computing system configured to perform any techniques described herein. For example, a network node may be a UE 115. As another example, a network node may be a base station 105. As another example, a first network node may be configured to communicate with a second network node or a third network node. In one aspect of this example, the first network node may be a UE 115, the second network node may be a base station 105, and the third network node may be a UE 115. In another aspect of this example, the first network node may be a UE 115, the second network node may be a base station 105, and the third network node may be a base station 105. In yet other aspects of this example, the first, second, and third network nodes may be different. Similarly, reference to a UE 115, a base station 105, an apparatus, a device, or a computing system may include disclosure of the UE 115, base station 105, apparatus, device, or computing system being a network node. For example, disclosure that a UE 115 is configured to receive information from a base station 105 also discloses that a first network node is configured to receive information from a second network node. In this example, consistent with this disclosure, the first network node may refer to a first UE 115, a first base station 105, a first apparatus, a first device, or a first computing system configured to receive the information; and the second network node may refer to a second UE 115, a second base station 105, a second apparatus, a second device, or a second computing system.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC). The UEs 115 may be designed to support ultra-reliable, low-latency, or critical functions. Ultra-reliable communications may include private communication or group communication and may be supported by one or more services such as push-to-talk, video, or data. Support for ultra-reliable, low-latency functions may include prioritization of services, and such services may be used for public safety or general commercial applications. The terms ultra-reliable, low-latency, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices or entities (e.g., radio heads and ANCs) or consolidated into a single network device or entity (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

In some systems, such as 5G or 5G NR (5GNR) systems or other communications systems employing the use of relatively high frequency bands, a device may suffer from performance degradation as a result of signal propagation losses or blockages. For example, some system deployments (e.g., 5G system deployments) may support communication over relatively high frequency bands, such as an FR2 radio frequency band (e.g., ranging from approximately 24.25 GHz to approximately 52.6 GHz) or an mmW radio frequency band (e.g., ranging from approximately 24 GHz to approximately 100 GHz), and communication over such radio frequency bands may be especially susceptible to path loss or other signal propagation losses and may be easily blocked or interrupted due to a user's hand placement or the presence of environmental objects or factors (e.g., rain or foliage). In such system deployments, a base station 105 (e.g., a network entity) and a UE 115 may support signaling mechanisms and parameter configurations to reduce the adverse impacts associated with signal propagation losses or blockages, but sometimes such signaling mechanisms and parameter configurations may still fail to provide a suitable performance level for an end user of the UE 115.

In some implementations, a UE 115 may access performance statistics tracked by a modem of the UE 115 and may aggregate the performance statistics at a higher layer of the UE 115 to facilitate a use of the performance statistics for modifying communications at the UE 115. For example, the UE 115 may signal information relating to the performance statistics to an application of the UE 115 to enable a selection of a configuration of the UE 115 by an end user or by an algorithm at an application layer of the UE 115. In some examples, for instance, the UE 115 may present one or more performance statistics to an end user via a user interface of the UE 115 and enable the end user to select a configuration of the UE 115 based on the presented performance statistics. Additionally or alternatively, the UE 115 may present a use-related suggestion (e.g., suggest a hand placement change) to the end user based on the performance statistics. A type or granularity of information related to the performance statistics that the UE 115 presents to the end user may depend on a type of the end user (which the end user may indicate via a selection at the UE 115). In some other examples, the UE 115 may update one or more network parameters via a function that accounts for application-specific information and performance statistics related to the deployment of the UE 115, which may enable a fine-tuning of network-configured parameters at the UE 115 without additional signaling between the UE 115 and the network.

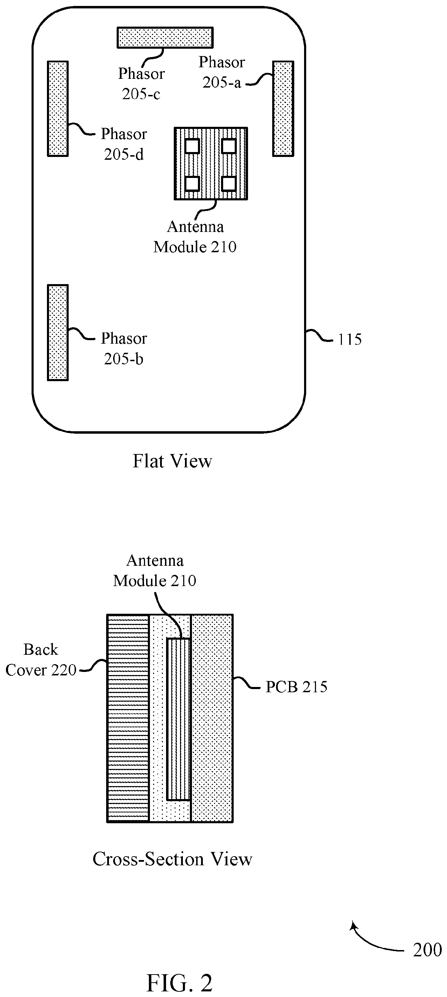

**FIG. 2** shows an example of device hardware 200 that supports deployment-based statistics for modifications to wireless communications in accordance with aspects of the present disclosure. The device hardware 200 may implement or be implemented to realize aspects of the wireless communications system 100. For example, the device hardware 200 may include hardware of a UE 115, which may be an example of corresponding devices described herein, including with reference to FIG. 1. In some aspects, the device hardware 200 illustrates an example UE antenna module hardware layout.

As shown by FIG. 2, which illustrates the device hardware 200 in different views including a "flat" view and a "cross-section" (or "lateral cut") view, the UE 115 may include one or more phasors 205, an antenna module 210, a printed circuit board (PCB) 215, and a back cover 220. Further, although components of the device hardware 200 is shown at various positions on the UE 115, the illustrated positions are example positions and components of the device hardware 200 may be located at one or more additional or alternative positions. Similarly, although the device hardware 200 is shown as including one antenna module 210, the UE 115 may include multiple antenna modules 210 (e.g., four antenna modules 210 or one for each phasor 205).

In some aspects, the UE 115 may include a number of phasors 205, including a phasor 205-a (e.g., a phasor 0), a phasor 205-b (e.g., a phasor 1), a phasor 205-c (e.g., a phasor 2), and a phasor 205-d (e.g., a phasor 3). The phasor 205-a may include one or more dipoles on (or facing) a back of the UE 115 and one or more patches on (or facing) a first side of the UE 115. The phasor 205-b may include one or more dipoles on (or facing) a front of the UE 115 and one or more patches on (or facing) a second side of the UE 115. The phasor 205-c may include one or more dipoles on (or facing) a top of the UE 115 and one or more patches on (or facing) the front of the UE 115. The phasor 205-d may include one or more dipoles on (or facing) the front of the UE 115 and one or more patches on (or facing) the second side of the UE 115.

The phasors 205 may be associated with antenna modules 210 (such that each phasor 205 is coupled with or is an example of an antenna module 210) and a placement of the antenna modules 210 in the UE 115 may impact beam management. For example, the UE 115 may include four antenna modules 210 and the placement (and orientation) of each of the antenna modules 210 may be responsible for or otherwise influence beam management procedures at the UE 115. As shown in FIG. 2, the flat view illustrates a perspective view of the UE 115 with the back cover 220 lifted showing the position of the antenna module 210 and the cross-section view (or lateral cut view) illustrates a perspective view of the UE 115 at the antenna module 210 showing a stack up arrangement of the PCB 215, the antenna module 210, and the back cover 220. The UE 115 may include the antenna module 210 between the PCB 215 and the back cover 220. In some aspects, the UE 115 may be constructed such that there is at least or approximately a 1 millimeter space or gap between the antenna module 210 and the back cover 220. In some examples, the UE 115 may be constructed with thickening or thinning of the back cover 220 near the antenna module 210. For example, the UE 115 may be constructed such that an area of the back cover 220 (which may be a glass back cover) proximate or on top of the antenna module 210 is relatively thicker or thinner as compared to a thickness of the back cover 220 at other areas of the UE 115.

The UE 115 may additionally or alternatively include one or more other components to enable the UE 115 for various functions, such as a camera function, a communication function, and an audio function. For example, the UE 115 may include one or more components for a flash for a camera, an antenna, a satellite digital multimedia broadcasting (DMB) tuner, a camera/DMB menu button, a direction-conversion tuner integrated circuit, a video processor, a speaker, a camera module, an earphone jack, a radio frequency receive solution, a volume button, a chipset, a battery power unit, a memory, a wireless transmitting or printing port, a battery charge socket, or any combination thereof.

In some cases, a UE 115 may suffer from deployment challenges relating, in part, to a hardware layout and a communication frequency. In cases in which a UE 115 operates in a 5GNR system (and especially in cases in which the UE 115 communicates using FR2 or mmW frequencies), for example, the UE 115 may experience relatively large signal propagation loss (as compared to FR1 or lower frequencies) and frequent blockages resulting from hand blockage, walls, foliage, or weather (e.g., rain or snow), among other examples. For example, signaling sent via relatively higher frequencies (e.g., FR2 and mmW frequencies) may be unable to pass through or penetrate a hand, a finger, a wall, foliage, or other commonly occurring objects in an environment in which a UE 115 may be deployed. As such, if a finger is placed on top of an antenna module 210, any signaling sent by the UE 115 via the antenna module 210 may be blocked by the finger and fail to reach an intended receiver.

To mitigate the adverse impacts of signal propagation loss and frequency blockage, a UE 115 may employ a beamforming technique according to which the UE 115 aligns transmission and reception in specific directions. To obtain or achieve a suitable (e.g., a maximum) beamforming gain, a UE 115 may support various communication modes (e.g., 5GNR modes) including standalone operation and non-standalone operation or various quantities of receive or transmit beams, MIMO layers, or component carriers, or any combination thereof. Further, a UE 115 may assist (e.g., transmit assistance information to) one or more network nodes in accordance with a deployment scenario of the UE 115 (e.g., a 5GNR deployment). In some cases, however, such assistance information (which may be wirelessly communicated between a UE 115 and a base station 105) may still fail to result in suitable performance of the UE 115. For example, based on relatively early or immature deployment of a supporting infrastructure, some services (e.g., 5GNR) may be unable to fully or suitably address its deployment challenges via signaling exchanges between a UE 115 and a base station 105 (e.g., a network entity).

In some implementations, a UE 115 may select data associated with a performance of the UE 115 in a given deployment scenario (e.g., in a 5GNR deployment scenario) and may use the selected data to achieve more suitable operating configurations in conjunction with one or more inputs from a user. For example, the UE 115 may obtain raw data or information via telemetry, non-telemetry, or histogram, or any combination thereof, from a modem of the UE 115 and may use the data or information to reduce resource or battery usage or to increase throughput across various communication modes. In other words, for example, the UE 115 may use such data or information as a catalyst between a modem and network and an end user to effectively improve or optimize UE resource or battery usage (in both idle and connected modes of operation) using different 5GNR modes of operation (in standalone and non-standalone modes). Such usage of data or information to optimize UE resources may be useful for UE performance, end users, and original equipment manufacturers (OEMs). Further, such usage of data or information to optimize or re-allocate UE resources may function as or otherwise support a value-added service as a result of enhancing a user experience.

In some aspects, such data or information may be associated with histogram- and non-telemetry-related details across various RATs that a UE 115 may support and may include statistical data from a modem of the UE 115 for various procedures (e.g., 5GNR procedures). A UE 115 may gather such statistical data from a modem of the UE 115 in accordance with an industry standard or specification. In some implementations, for example, a UE 115 may provide a user with a better experience or achieve greater performance (either or both of which may be associated with data rates, spectral efficiency, latency, and battery life, among other examples) if the UE 115 understands how many times and for how long the UE 115 spent in a specific configuration, at a specific device performance level, or at a specific battery usage level. As such, the UE 115 may gather, obtain, or otherwise aggregate such information and may apply or support an intelligent approach (especially for 5GNR technology variants including mmW quick deployment) and enable a user to achieve a benefit associated with a current mode or use case, fine tuning an algorithm associated with communication parameters, or delivering relevant information pertaining to daily usage to the user.

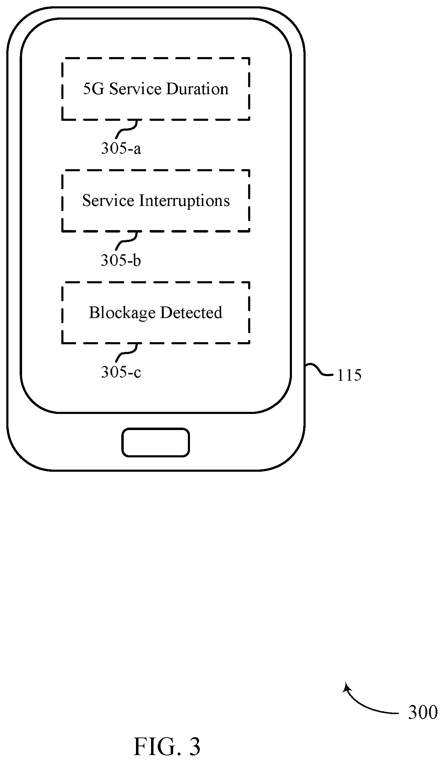

In some implementations, a UE 115 may provide such information to a user via a user interface and may enable the user to make or perform a selection associated with a configuration or mode of the UE 115 based on the information or may provide a suggestion to the user based on the information, or both. The UE 115 may distinguish between different types of users, such as between a typical consumer and an advanced user or technician, and may provide information to a user accordingly. For example, if the UE 115 categorizes a user as a typical consumer, the UE 115 may expose or provide high level information associated with how often the UE 115 received 5G service, how many service interruptions occurred during a given time frame, or how often or when an antenna blockage is detected, among other examples of high level statistics associated with one or more service types. Alternatively, if the UE 115 categorizes a user as a more advanced user or technician, the UE 115 may expose or provide relatively more advanced or more granular information associated with cell- or beam-level information (with an option to select), MIMO information, or CA information, among other examples of more granular statistics or configuration options associated with one or more service types. As such, the UE 115 may trigger or support one or more applications at the UE 115 (e.g., via one or more user interfaces of the UE 115) based on the collection of the raw data or information via histogram, statistics, or non-telemetry information from the modem and based on a type or category of a user. Additional details relating to such one or more applications and corresponding user interfaces are illustrated by and described with reference to FIGs. 3 through 8.

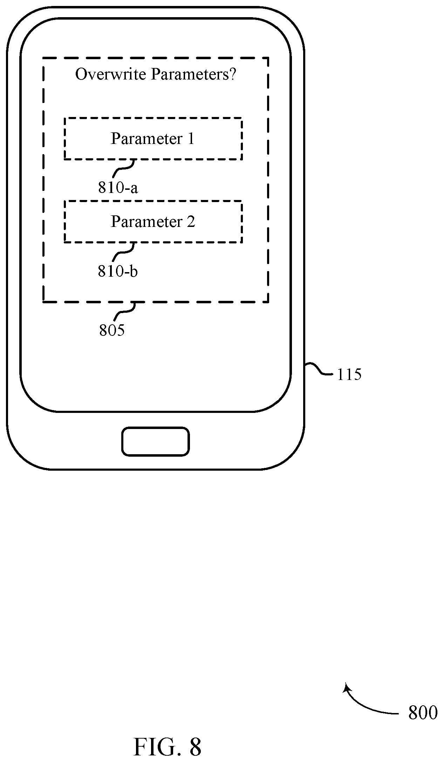

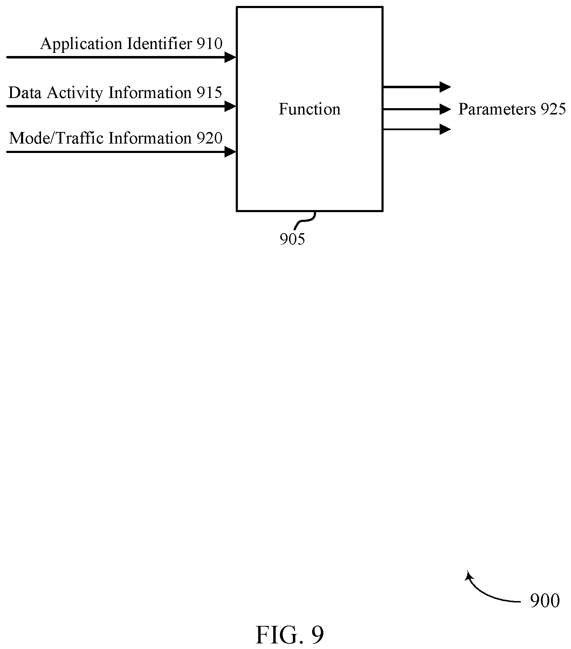

Additionally, or alternatively, the UE 115 may support an algorithm update or optimization procedure based on observed or obtained statistics associated with one or more service types. For example, the UE 115 may select parameters based on observed statistics (via an online training or an offline training) or may prompt a user to select parameters based on observed statistics (which could also be obtained via an online training or an offline training). Additional details relating to such an algorithm update or optimization are illustrated by and described with reference to FIGs. 8 and 9.

Additionally, or alternatively, the UE 115 may support a debugging or root-cause identification based on observed statistics. For example, the UE 115 may track a block error rate (BLER) and various channel measurements, such as an SNR, and may correlate trends in BLER and channel measurements with one or more software builds associated with the UE 115. For instance, if the UE 115 identifies a relatively high BLER (e.g., a BLER greater than a threshold BLER) and a relatively high SNR (e.g., an SNR greater than threshold SNR or an otherwise good or suitable SNR), the UE 115 may detect that a problem is likely occurring at the UE 115 (as the problem is not likely to be attributable to poor channel conditions) and may correlate the high BLER and good SNR with a specific software build.

In other words, the UE 115 may detect a pattern of performance statistics that fail to satisfy one or more performance thresholds during time windows associated with a channel condition that satisfies a threshold channel condition and may correlate the pattern with the software build of the UE 115. As an example, the UE 115 may notice frequency stability occurrence and call drop related to a specific software build. As such, the UE 115 (or an OEM) may update the software build or switch to a different software build to reduce the BLER during good channel conditions.

Further, although described in the context of BLER and channel conditions, the UE 115 may track performance statistics and other measurements and correlate any associated problems with other functionality of the UE 115 in accordance with any objective (e.g., an objective of an OEM or tester). For example, OEMs may monitor how specific statistics are faring for each upgrade and may check if that upgrade is providing a good or suitable experience to users. The UE 115 may support one or more applications or user interfaces to enable a user (e.g., an OEM or tester) to access such correlations or relations or may signal such correlations or relations to one or more other devices (e.g., one or more devices to which an OEM or tester may have access). The user interface or signaling exchange may enable the OEM or tester to make updates or switches on-the-fly or may facilitate knowledge of the correlations or relations that the OEM or tester may consider as part of a subsequent upgrade.

**FIG. 3** shows an example of a user interface 300 that supports deployment-based statistics for modifications to wireless communications in accordance with aspects of the present disclosure. The user interface 300 may implement or be implemented to realize aspects of the wireless communications system 100 or the device hardware 200. For example, a UE 115 may support one or more applications 305 via the user interface 300 and such a UE 115 may be an example of corresponding devices described herein, including with reference to FIGs. 1 and 2. In some implementations, the UE 115 may provide the user interface 300 to a user in accordance with detecting that a user of the UE 115 is a first type of user, such as a typical consumer that may be interested in simple or basic information relating to performance of the UE 115.

In some examples, the UE 115 may provide or support an application 305-a associated with a 5G service duration. For example, the application 305-a (which may be a selectable icon or provide information without further navigation) may indicate how often the UE 115 received 5G service. In some implementations, the application 305-a may indicate how often the UE 115 received 5G service in different modes (e.g., different modes of 5G). For example, the application 305-a may indicate how often the UE 115 received 5G service in a standalone mode or how often the UE 115 received 5G service in a non-standalone mode, or both. The application 305-a may indicate the 5G service duration as a total cumulative time spent receiving 5G service, a series of time stamps associated with receiving 5G service and not receiving 5G service, or any combination thereof.

Further, in some implementations, the application 305-a may provide an option for the user to select between different modes in accordance with a measured or expected performance of each mode. For example, the application 305-a may indicate how often the UE 115 received 5G service in a standalone mode and how often the UE 115 received 5G service in a non-standalone mode and may prompt the user to select between standalone operation or non-standalone operation. The user may select one of standalone operation or non-standalone operation in accordance with the information provided and the UE 115 may communicate in accordance with standalone operation or non-standalone operation accordingly.

In an example, the UE 115 may communicate on a first network and may determine that a 5G standalone service (using a low band 5G anchor frequency band) is slower than a 5G non-standalone service (using an LTE anchor frequency band and a mmW frequency band). In such an example, the application 305-a may indicate that the UE 115 spent more time receiving the 5G non-standalone service and prompt the user to select between 5G standalone service and 5G non-standalone service. Further, in some aspects, a same cell may be capable of standalone and non-standalone service based on the UE 115 and core 5GNR network support and, in some cases, a non-standalone mode having dual-connectivity (with a component carrier on an FR1 frequency band or multiple component carriers on an FR2 frequency band) may be expected to provide a greater throughput for an application (e.g., a high throughput application) as compared to a standalone mode (e.g., due to FR1, which may sometimes include a single component carrier, deployment).

Additionally, or alternatively, the UE 115 may provide or support an application 305-b associated with one or more service interruptions. For example, the application 305-b (which may be a selectable icon or provide information without further navigation) may indicate how many service interruptions the UE 115 detects over a given time frame or window. In some implementations, the UE 115 may provide information relating to the service interruptions via the application 305-b in terms of how many radio link failure (RLF) events the UE 115 detected, how many out-of-service (OoS) occurrences the UE 115 detected, how many call failures the UE 115 detected, or any combination thereof.

For example, the UE 115, operating either in accordance with a standalone operation or a non-standalone operation, may call per physical cell identifier (PCI), per tracking area update (TAU), or per routing area update (RAU) and may maintain statistics associated with RLF events, OoO occurrences, or call failures. As such, if a user of the UE 115 triggers a call or request to improve a performance of the UE 115, the UE 115 may indicate, to the user via the application 305-b, a notification of the statistics associated with the RLF events, OoO occurrences, or call failures based on a history of usage to enable the user to select a configuration that may improve the performance of the UE 115.

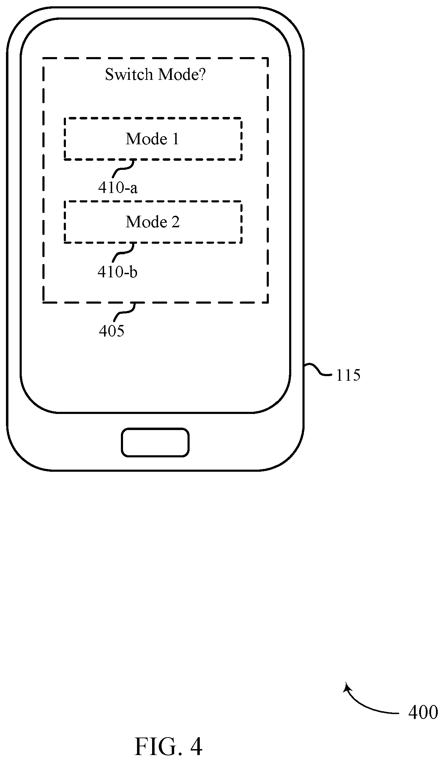

For example, the UE 115 may inform the user of a quantity of RLF events, random access channel (RACH) failures, or call failures along with corresponding reasons to enable the user to plan their activity with an understanding of network limitations and guidance to mitigate such limitations. In some aspects, the user of the UE 115 may call or request to improve a performance of the UE 115 by option of selecting a communication mode or RAT. Additional details relating to such a selection between communication modes or RATs via a user interface of the UE 115 are illustrated by and described in more detail with reference to FIG. 4.

Additionally, or alternatively, the UE 115 may provide or support an application 305-c associated with a detected blockage. For example, the application 305-c (which may be a selectable icon or provide information without further navigation) may indicate or provide a notification to a user if the UE 115 detects an antenna blockage degrading a throughput performance or an activity of the user. In some implementations, the application 305-c may provide a recommendation or suggested action that that the user may take to address the detected blockage. For example, the application 305-c may indicate that the user may move a finger. Additionally, or alternatively, the application 305-c may indicate that the user may move, remove, or replace a cover. Additionally, or alternatively, the application 305-c may indicate that the user may change a position or orientation of the UE 115.

For example, UE performance at some radio frequency bands, such as FR2 bands, may be prone to be easily impacted due to a normal phone case cover available in the market, due to hand blockage, or due to how the UE 115 is placed because of how antenna panels at the UE 115 are located and UE beam management affecting line-of-sight (LOS) and non-LOS (NLOS) coverage, which may result in such a notification being sent by the UE 115 to the user suitable for various scenarios. Further, the user may not be aware of a hardware layout design of the UE 115 and how beam management plays an important role in providing a high throughput experience during deployment (e.g., commercial deployment). As such, it may be suitable for the UE 115 to notify the user in a form of a user interface notification of a detected blockage and to guide the user to avoid specific situations that may result in an antenna of the UE 115 being blocked and performance degradation (e.g., via one or more suggestions or recommendations on hand placement, positioning, or cases, among other examples).

For example, the UE 115 may detect if an antenna blockage is due to an incompatible mobile cover and may trigger a notification, via the application 305-c, for the user to change the cover of the UE 115. Additionally, or alternatively, the UE 115 may detect if an antenna blockage (and corresponding poor performance) is due to hand blocking and may trigger a notification, via the application 305-c, for the user to change a holding position or to avoid specific touch points to facilitate improved performance (e.g., higher data rates). For example, the UE 115 may show a direction of hand movement, a suggested hand position, or a suggested positioning of the UE 115 outside of a hand of the user (e.g., a suggestion to place the UE 115 on a table or other surface) that may result in higher data rates. For example, the UE 115 may provide information indicating or otherwise suggest that the user move a specific side hand (e.g., right or left) holding position toward up (e.g., higher on the phone) or toward down (e.g., lower on the phone) for higher data rates, or to avoid using a hard cover on the UE 115 for relatively higher performance.

The UE 115 may detect a blockage in various ways. For example, the UE 115 may detect a blockage if the UE 115 uses a single layer or 1E receive beam for communication for a threshold amount of time during a given duration, if the UE 115 measures a reference signal receive power (RSRP) that fails to satisfy (e.g., is less than) a threshold RSRP. Additionally, or alternatively, the UE 115 may detect a blockage if the UE 115 measures a relatively high imbalance between a primary path and a diversity (e.g., secondary) path in scenarios associated with fair channel conditions (e.g., an SNR above a threshold SNR) and a LOS link. Additionally, or alternatively, the UE 115 may detect a blockage if the UE 115 detects a quantity of RACH failures that exceeds a threshold quantity of RACH failures or detects that a frequency of RACH failures exceeds a threshold frequency of RACH failures (e.g., due to beam failures).

The UE 115 may provide such suggestions whenever a blockage is detected or during specific scenarios, such as a scenario in which the UE 115 is tasked with a relatively large download (e.g., a download size greater than a threshold download size). In some aspects, the suggestions or notifications that the UE 115 provides to the user may be pre-configured by an OEM in accordance with a hardware layout of the UE 115. For example, the UE 115 may take, as an input, a hardware design layout to identify relatively sensitive touch points (e.g., locations that, if blocked, may result in performance degradation) that may impact a performance of mmW or other radio frequency technology that is relatively more sensitive to blockages and may present those relatively sensitive touch points to the user. In other words, the UE 115 may feed the hardware design with antenna details which may cause or be associated with blockage.

**FIG. 4** shows an example of a user interface 400 that supports deployment-based statistics for modifications to wireless communications in accordance with aspects of the present disclosure. The user interface 400 may implement or be implemented to realize aspects of the wireless communications system 100, the device hardware 200, or the user interface 300. For example, a UE 115 may support an application 405 via the user interface 400 and such a UE 115 may be an example of corresponding devices described herein, including with reference to FIGs. 1 through 3. In some implementations, the UE 115 may provide the user interface 400 to a user in accordance with detecting that a user of the UE 115 is a first type of user, such as a typical consumer that may be interested in simple or basic information relating to performance of the UE 115.

In some examples, the UE 115 may show a user a notification (e.g., a pop-up notification) via the application 405 to enable the user to select between different modes 410. For example, if the UE 115 camps on a cell capable of providing 5G standalone service, the UE 115 may show the user a notification to enable the user to change a RAT mode preference if a selection between RAT modes may improve a performance of the UE 115 (e.g., in terms of reliability or data rates). In such examples, the different modes 410 may correspond to different RAT modes such that a mode 410-a corresponds to a first RAT mode and a mode 410-b corresponds to a second RAT mode. Additionally, or alternatively, the different modes 410 may correspond to standalone and non-standalone operation or FR1 operation and FR2 operation, among other examples of different communication modes with which the UE 115 may operate in accordance.

In some implementations, the UE 115 may show the notification to enable the UE 115 to select between different modes 410 if multiple modes 410 are available at the UE 115 (e.g., if service associated with the mode 410-a and the mode 410-b are both available at the UE 115) or if the UE 115 is experiencing less reliable, poorer experience in an application (e.g., a high throughput application) if using one of the modes 410. As such, the UE 115 may provide an option to the user in a manner of suggesting that a current mode 410 may be providing a relatively worse performance (e.g., in terms of reliability or throughput) than another mode 410 that is available to the UE 115.

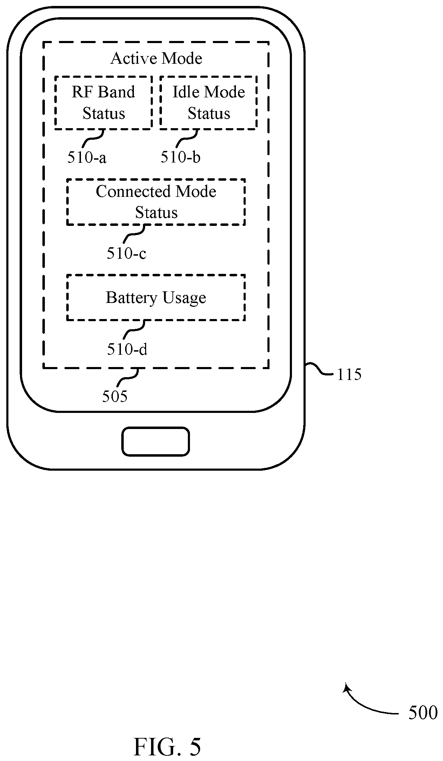

Further, although shown as presenting two options to the user via the user interface 400 and the application 405, the UE 115 may provide any number of options to the user. In some aspects, the UE 115 may provide additional information for an active mode 410 or another available mode 410 to the user via another application (or via a toggling of one of the modes 410 shown via the application 405) to further assist the user in selecting a mode 410 that may increase performance of the UE 115. Additional details relating to such an application providing further information and assistance for a specific mode are illustrated by and described with reference to FIG. 5.

**FIG. 5** shows an example of a user interface 500 that supports deployment-based statistics for modifications to wireless communications in accordance with aspects of the present disclosure. The user interface 500 may implement or be implemented to realize aspects of the wireless communications system 100, the device hardware 200, the user interface 300, or the user interface 400. For example, a UE 115 may support an application 505 via the user interface 500 and such a UE 115 may be an example of corresponding devices described herein, including with reference to FIGs. 1 through 4. In some implementations, the UE 115 may provide the user interface 500 to a user in accordance with detecting that a user of the UE 115 is a first type of user, such as a typical consumer that may be interested in simple or basic information relating to performance of the UE 115.

Further, in some implementations, the UE 115 may provide or otherwise show the application 505 to the user to further assist the user in selecting a mode (e.g., a mode 410) that may increase performance of the UE 115. For example, via the application 505, the UE 115 may provide the user with a number of information fields 510 conveying performance or usage statistics associated with a specific mode (e.g., an active mode). In some aspects, the UE 115 may present an information field 510-a associated with a radio frequency band status, an information field 510-b associated with an idle mode status, an information field 510-c associated with a connected mode status, or an information field 510-d associated with a battery usage. As such, the user interface 500 may present an active mode type (e.g., an active RAT mode type) to distinguish between FR1 and FR2 along with information pertaining to an idle mode status and a connected mode status and a battery usage of the UE 115. The UE 115 may obtain such information from current and past history. As such, the UE 115, via the application 505, may facilitate a decision, by the user, between different modes (as the user may account for the information conveyed by the information fields 510 for one or more mode types to determine which mode type provides a greatest reliability or throughput).

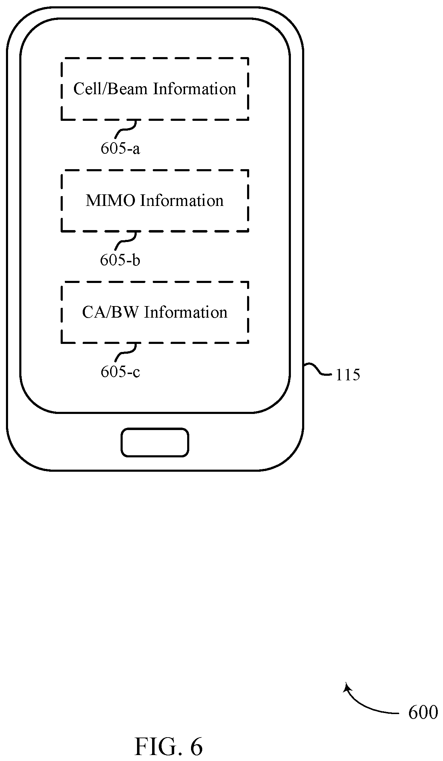

**FIG. 6** shows an example of a user interface 600 that supports deployment-based statistics for modifications to wireless communications in accordance with aspects of the present disclosure. The user interface 600 may implement or be implemented to realize aspects of the wireless communications system 100, the device hardware 200, the user interface 300, the user interface 400, or the user interface 500. For example, a UE 115 may support one or more applications 605 via the user interface 600 and such a UE 115 may be an example of corresponding devices described herein, including with reference to FIGs. 1 through 5. In some implementations, the UE 115 may provide the user interface 600 to a user in accordance with detecting that a user of the UE 115 is a second type of user, such as an advanced user (e.g., a technician) that may be interested in relatively more technically advanced or granular information relating to performance of the UE 115. In accordance with having access to more technically advanced or granular information, an end user or an OEM may estimate UE performance as per specification or enable a field test user to control a configuration of the UE 115 while testing, or both.

In some examples, the UE 115 may provide an application 605-a associated with cell- or beam-level information to the user. For example, the application 605-a may indicate, for a cell or beam, one or more performance metrics or statistics (e.g., statistics associated with a beam strength, a quantity of beam failures, a frequency of beam failures, a throughput, or an error rate, among other examples). In some aspects, the UE 115 may provide the application 605-a to enable the user to select between different cells or beams or to select between different configurations of the UE 115 associated with cell or beam usage by the UE 115.

Additionally, or alternatively, the UE 115 may provide an application 605-b associated with MIMO information to the user. For example, the application 605-b may indicate how many spatial layers the UE 115 uses for reception or how many spatial layers are used for transmission, or both, and one or more corresponding performance metrics or statistics. In some aspects, the UE 115 may provide the application 605-b to enable the user to select between different transmit or receive options (e.g., how many spatial layers are used for transmission or how many spatial layers are used for reception, or both). As such, the UE 115 may inform the user of a number of transmit or receive beams (e.g., a number of beams or layers associated with uplink or downlink MIMO) based on an activity of the user and may provide insight as to how the activity and number of transmit or receive beams impacts a battery usage of the UE 115. The UE 115 may provide additional semantic details depending on if the UE 115 determines that information may be useful for the user in the selecting between different transmit or receive options.

Additionally, or alternatively, the UE 115 may provide an application 605-c associated with carrier aggregation (shown as CA in FIG. 6) or bandwidth (shown as BW in FIG. 6) information to the user. For example, the application 605-c may indicate a carrier aggregation level (or whether the UE 115 uses carrier aggregation) and one or more corresponding performance metrics or statistics. Additionally or alternatively, the application 605-c may indicate bandwidth information (e.g., which bandwidth or BWP the UE 115 uses for communication) and one or more corresponding performance metrics or statistics.

In some implementations, across the various selections that the UE 115 may prompt a user to make via any of the applications 605, the UE 115 may provide the user with a preview of a selection and how the selection may change a performance of the UE 115 in terms of battery performance or throughput. The UE 115 may provide the user with such a preview and request a confirmation from the user and, if the user confirms the selection, the UE 115 may confirm the changes and configure itself accordingly.

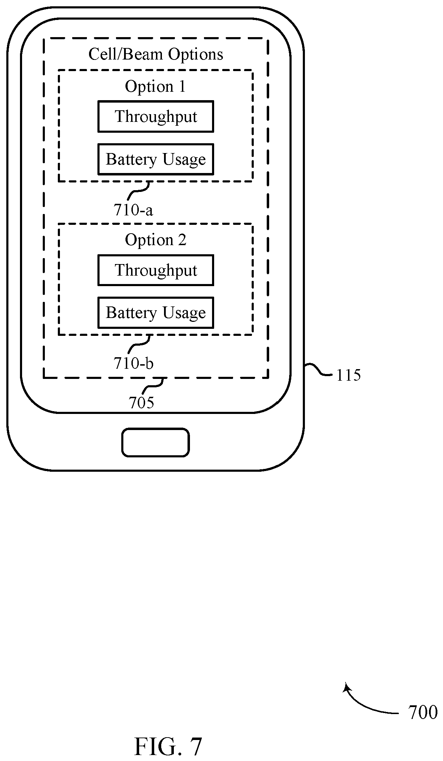

**FIG. 7** shows an example of a user interface 700 that supports deployment-based statistics for modifications to wireless communications in accordance with aspects of the present disclosure. The user interface 700 may implement or be implemented to realize aspects of the wireless communications system 100, the device hardware 200, the user interface 300, the user interface 400, the user interface 500, or the user interface 600. For example, a UE 115 may support an application 705 via the user interface 700 and such a UE 115 may be an example of corresponding devices described herein, including with reference to FIGs. 1 through 6. In some implementations, the UE 115 may provide the user interface 700 to a user in accordance with detecting that a user of the UE 115 is a second type of user, such as an advanced user (e.g., a technician) that may be interested in relatively more technically advanced or granular information relating to performance of the UE 115.

In some implementations, for example, the UE 115 may provide a user with the application 705 to enable the user to select a cell or beam. In some aspects, the UE 115 may support the application 705 relatively constantly to enable the user to select a cell or beam any time. Alternatively, the UE 115 may support the application 705 if the UE 115 detects or observes a performance degradation. For example, the UE 115 may measure an RSRP, a reference signal strength indicator (RSSI), or an SNR of one or more cells or beams and may provide the application 705 if any one or more of such metrics fail to satisfy a threshold. In some aspects, the UE 115 may indicate an RSRP, an RSSI, or an SNR histogram per RRC state in E-UTRAN NR - dual connectivity (ENDC) and 5GNR standalone for a given time window T.

Via the application 705, the UE 115 may provide the user with an information field 710-a presenting information associated with a first option (which may correspond to a first set of one or more available cells or a first set of one or more available beams) and an information field 710-b presenting information associated with a second option (which may correspond to a second set of one or more available cells or a second set of one or more available beams). For example, the UE 115 may present (e.g., via a drop-down menu) information relating to a throughput (e.g., an achievable throughput) and a battery usage for each of the first option and the second option. Additionally, or alternatively, the UE 115 may present (e.g., via the drop-down menu) information relating to a quantity of component carriers used or a bandwidth used or a RAT (e.g., LTE or 5GNR) per connection statistic.

Further, the application 705 may provide a suggestion or recommendation relating to a beamforming configuration, a MIMO configuration, a cell configuration, or any combination thereof. For example, the UE 115 may evaluate a performance (e.g., a network boost) through 4x4 MIMO by comparing a two receive beam (2Rx) device (or 2Rx operation) against a four receive beam (4Rx) device (or 4Rx operation) in the same 4x4 MIMO network. In some aspects, a use of two additional transmitter and receiver antennas may increase an overall throughput by using higher ranks (e.g., higher layers) and additional transmission diversity gain. In such aspects, the UE 115 may recommend, to the user via the user interface 700, a switch to a different beamforming or MIMO configuration to achieve greater throughput or reliability.

**FIG. 8** shows an example of a user interface 800 that supports deployment-based statistics for modifications to wireless communications in accordance with aspects of the present disclosure. The user interface 800 may implement or be implemented to realize aspects of the wireless communications system 100, the device hardware 200, the user interface 300, the user interface 400, the user interface 500, the user interface 600, or the user interface 700. For example, a UE 115 may support an application 805 via the user interface 800 and such a UE 115 may be an example of corresponding devices described herein, including with reference to FIGs. 1 through 7. In some implementations, the UE 115 may provide the user interface 800 to a user in accordance with detecting that a user of the UE 115 is a second type of user, such as an advanced user (e.g., a technician) that may be interested in relatively more technically advanced or granular information relating to performance of the UE 115.

In some implementations, for example, the UE 115 may provide a user with the application 805 to enable the user to update (e.g., write or overwrite) one or more configuration parameters received from the network. Such configuration parameters may be referred to herein as network parameters. In some scenarios, for example, the UE 115 may receive one or more faulty or suspicious parameters due to 5GNR immaturity. Additionally, or alternatively, the UE 115 may provide the user with the application 805 to enable the user to delete (e.g., force dump) one or more parameters. For example, the UE 115 may purge or force dump one or more parameters as part of or as a result of reporting an issue.

As such, the UE 115 may provide an information field 810-a associated with a first parameter and an information field 810-b associated with a second parameter via the application 805 and the user may select to edit, update, modify, or delete a value for the first parameter or the second parameter via the information field 810-a or the information field 810-b, respectively. Additionally, or alternatively, the UE 115 may support one or more functions or algorithms for updating or modifying a value of one or more parameters at an application layer of the UE 115 based on the information associated with the performance of the UE 115. Additional details relating to such a function or algorithm are illustrated by and described with reference to FIG. 9.

**FIG. 9** shows an example of a parameter refinement process 900 that supports deployment-based statistics for modifications to wireless communications in accordance with aspects of the present disclosure. The parameter refinement process 900 may implement or be implemented to realize aspects of the wireless communications system 100, the device hardware 200, the user interface 300, the user interface 400, the user interface 500, the user interface 600, the user interface 700, or the user interface 800. For example, a UE 115 may support a function 905 in accordance with the parameter refinement process 900 and such a UE 115 may be an example of corresponding devices described herein, including with reference to FIGs. 1 through 8. In some implementations, the UE 115 may employ the parameter refinement process 900 to select or update network parameters 925 based on observed statistics associated with a deployment or performance of the UE 115. As such, the UE 115 may achieve enhanced performance as a result of selecting or updating network parameters 925 based on an application of the UE 115 without (solely) relying on a signaling mechanism (e.g., a feedback mechanism) between the UE 115 and a base station 105 (e.g., a network entity).

For example, some issues (e.g., due to immature or potentially relatively poorly understood network behavior) impacting user downlink throughput performance may be associated with a missing PDCP or RLC sequence causing coverage holes due to UE maximum transmission unit (MTU) size and varying or unexpected numbers of IP packets being received on an LTE leg and an NR leg. Such varying or unexpected numbers of IP packets being received on an LTE leg and an NR leg may cause issues as a result of NR processing being relatively faster and LTE processing being relatively slower, so, for effective processing, a number of IP packets delivered by the network to the UE may be aligned. As such, a mis-alignment in the number of IP packets may adversely impact a functionality of the UE 115. Further, such a mis-alignment may occur relatively frequently in some deployment scenarios due to various timer values (e.g., *t-reordering, t-reassembly,* and *t-status prohibit*) that the network may configure at the UE 115 (e.g., via RRC signaling or (re-)configuration).

For example, the UE 115 may receive one or more parameters 925 (e.g., a *t-reordering* parameter, a *t-reassembly* parameter, and a *t-status prohibit* parameter) from a base station 105 and may select, modify, or update a value for the one or more parameters 925 according to an application of the UE 115 and a data activity. In some aspects, the parameters 925 may include network-defined packet data protocol (PDP), PDCP, or RLC parameters, such as PDP, PDCP, or RLC downlink acknowledged mode (AM), unacknowledged mode (UM), or downlink management (DM) parameters. Further, such PDP, PDCP, or RLC parameters may be downlink AM radio bearer parameters. As such, the UE 115 may employ the parameter refinement process 900 to facilitate an application-based PDP, PDCP, or RLC downlink AM parameters negotiation without relying on a signaling mechanism between the UE 115 and a base station 105. In other words, the UE 115 may handle a parameter 925 update on its own based on an application of the UE 115 or an activity of the UE 115 (and based on manual debugging) rather than explicitly requesting to have the parameter 925 changed from a termination entity or the network.

In some implementations, the UE 115 may utilize an activity mode, in addition to an active application of the UE 115, to select, modify, or update a value for the one or more parameters 925. An activity mode may include an interactive mode, a web browsing mode, or a foreground or background mode, among other examples of modes of activity or operation at the UE 115. The UE 115 may identify an activity mode based on an indication from an application processor of the UE 115 or may infer an activity mode based on traffic activity. Additionally, or alternatively, the UE 115 may fine-tune the one or more parameters 925 based on a mode of downlink traffic if data from the network is on an NR leg or on both an LTE and NR leg (e.g., as may be the case if the UE 115 is operating in a non-standalone mode) depending on a network split ratio. As described herein, a network split ratio or configuration may refer to a ratio between a first percentage of time spent on a first RAT leg and a second percentage of time spent on a second RAT leg. For example, a network split ratio or configuration of X:Y on NR:LTE may indicate that X% of time was spent on an NR leg and Y% of time was spent on an LTE leg.

For example, for a relatively high downlink throughput application if network data split configuration is 100:0 on NR:LTE in a non-standalone mode, channel conditions are fair, HARQ mechanism is seen smooth and no retransmissions are observed, the UE 115 may use such raw data or information along with a PDCP or RLC parameter configuration with short values of *t-reordering, t-reassembly,* and *t-status prohibit* to fine-tune the values via the function 905 (e.g., which may be referred to as an "APP func()"). In examples associated with such a system performance, the UE 115 may obtain updated values for the parameters 925 such that *t-reordering =* approximately 40 milliseconds, *t-reassembly =* approximately 5-10 milliseconds, and *t-status prohibit =* approximately 0 milliseconds.

For further example, for another scenario of a relatively high downlink throughput application if network data split configuration is 70:30 on NR:LTE, if network is not sending data in a sequence causing holes at a Layer 2 (L2) of the UE 115 to build up, PDCP is missing sending packets to upper layer causing packet drop at PDCP and overall downlink throughput degradation recovery at RLC layer, and if the UE 115 receives a PDCP or RLC parameter configuration with high values of *t-reordering, t-reassembly,* and *t-status prohibit,* the UE 115 may update the parameters 925 to give more time to recover data at the L2 of the UE 115. Such may increase end user throughput experience and support that, in AM- or transmission control protocol (TCP)-based traffic, the network avoids unnecessarily reducing downlink shared channel, such as physical downlink shared channel (PDSCH), scheduling or scheduling to the UE 115. In such examples, the UE 115 may update the parameters 925 such that *t-reordering =* approximately 80-100 milliseconds, *t-reassembly =* approximately 20 milliseconds, and *t-status prohibit* = approximately 10-15 milliseconds.

As such, the UE 115 may achieve greater throughput performance as a result of reducing a BLER, increasing a likelihood for data recovery, or aligning packet latency at the UE 115 (e.g., across different RATs). In some examples, and as shown in FIG. 9, the UE 115 may provide one or more inputs into the function 905 to support an algorithm optimization or an otherwise intelligent evaluation of input parameters 925 based on observed statistics (e.g., could be during online or offline mode) via the function 905 to obtain one or more optimized parameters 925 suitable for a user's activity. For example, the UE 115 may input application information into the function 905 to obtain one or more updated parameters 925. The application information may include an application identifier 910, data activity information 915, or mode or traffic information 920.

The application identifier 910 may include an application name or other identifier of an application of the UE 115. The data activity information 915 may include a quantity of bytes associated with the application, a quantity of transmissions, receptions, or retransmissions associated with the application, a quantity of packets missed at an upper layer associated with the application, a Layer 2 memory failure (where such a Layer 2 memory may be associated with one or more vectored input/output (I/O) operations) associated with the application, a PDCP packet drop associated with the application, an RLC BLER associated with the application, or a residual physical layer BLER associated with the application. Further, the data activity information 915 may be associated with one or more parameters, such as a delivered due to memory flow control parameter, a delivered due to reorder time expiry parameter, or a dropped due to IP application flow control parameter. In accordance with the data activity information 915 being associated with one or more parameters, the data activity information 915 may be delivered due to memory flow control, delivered due to reorder timer expiry, or dropped due to IP application flow control.

The traffic information 920 may include a type of mode, a traffic profile for the application, an activity mode of the application, or a type of traffic. A type of mode may refer to an AM or a UM, a traffic profile for the application may refer to include information associated with inter-arrival statistics, burst statistics, or packet size statistics, an activity mode of the application may refer to web-browsing, gaming, movie downloading, or video calling, and a type of traffic may refer to user datagram protocol (UDP) or TCP information (e.g., a quantity of connections that are open or active).

As such, an evaluation made by the UE 115 in the function 905 may be based on input parameters 925 and application information to obtain optimized output parameters 925. In other words, the UE 115 may optimize or otherwise update the output parameters 925 as per sample values already shared such that the UE 115 may avoid both a Layer 2 memory failure as well as PDCP holes to achieve an increased performance at the UE 115. The UE 115 may perform such an updating as per sample values to increase UE performance in various scenarios, such as if *t-reordering* expiry > 0, residual physical layer BLER > 1%, and Layer 2 memory failure > 0, or if *t-reordering* expiry = 0, residual physical layer BLER > 1%, and Layer 2 memory failure > 0, or if residual physical layer BLER > 1% and Layer 2 memory failure > 0, or if Layer 2 memory failure > 0 and dropped due to IP application flow control > 0.

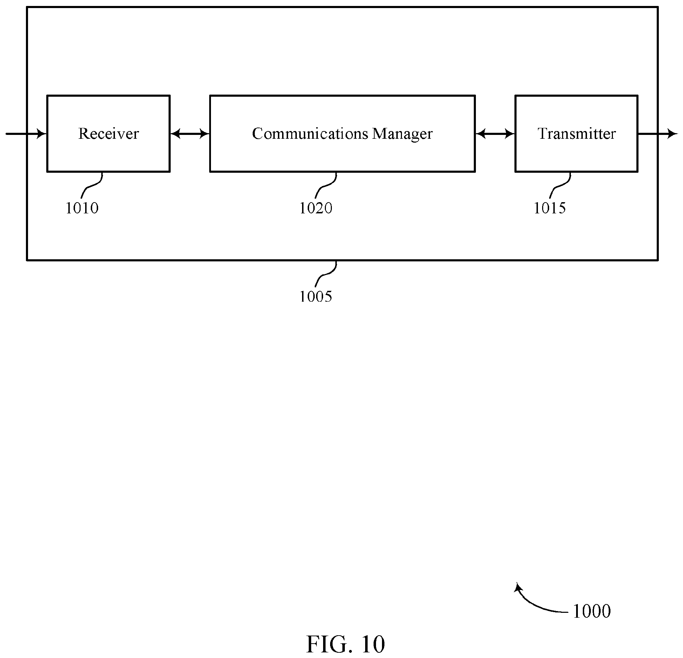

**FIG. 10** shows a block diagram 1000 of a device 1005 that supports deployment-based statistics for modifications to wireless communications in accordance with aspects of the present disclosure. The device 1005 may be an example of aspects of a UE 115 as described herein. The device 1005 may include a receiver 1010, a transmitter 1015, and a communications manager 1020. The device 1005 may also include a processor. Each of these components may be in communication with one another (e.g., via one or more buses).

The receiver 1010 may provide a means for receiving information such as packets, user data, control information, or any combination thereof associated with various information channels (e.g., control channels, data channels, information channels related to deployment-based statistics for modifications to wireless communications). Information may be passed on to other components of the device 1005. The receiver 1010 may utilize a single antenna or a set of multiple antennas.

The transmitter 1015 may provide a means for transmitting signals generated by other components of the device 1005. For example, the transmitter 1015 may transmit information such as packets, user data, control information, or any combination thereof associated with various information channels (e.g., control channels, data channels, information channels related to deployment-based statistics for modifications to wireless communications). In some examples, the transmitter 1015 may be co-located with a receiver 1010 in a transceiver module. The transmitter 1015 may utilize a single antenna or a set of multiple antennas.

The communications manager 1020, the receiver 1010, the transmitter 1015, or various combinations thereof or various components thereof may be examples of means for performing various aspects of deployment-based statistics for modifications to wireless communications as described herein. For example, the communications manager 1020, the receiver 1010, the transmitter 1015, or various combinations or components thereof may support a method for performing one or more of the functions described herein.

In some examples, the communications manager 1020, the receiver 1010, the transmitter 1015, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 1020, the receiver 1010, the transmitter 1015, or various combinations or components thereof may be implemented in code (e.g., as communications management software or firmware) executed by a processor. If implemented in code executed by a processor, the functions of the communications manager 1020, the receiver 1010, the transmitter 1015, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 1020 may be configured to perform various operations (e.g., receiving, monitoring, transmitting) using or otherwise in cooperation with the receiver 1010, the transmitter 1015, or both. For example, the communications manager 1020 may receive information from the receiver 1010, send information to the transmitter 1015, or be integrated in combination with the receiver 1010, the transmitter 1015, or both to receive information, transmit information, or perform various other operations as described herein.

The communications manager 1020 may support wireless communication at a UE in accordance with examples as disclosed herein. For example, the communications manager 1020 may be configured as or otherwise support a means for obtaining, from a modem of the UE, statistics associated with a deployment of the UE in a system supporting at least a first RAT, the statistics associated with a service provided from at least the first RAT, and the provided service based on the deployment of the UE. The communications manager 1020 may be configured as or otherwise support a means for signaling, to an application of the UE, information associated with the statistics. The communications manager 1020 may be configured as or otherwise support a means for modifying communications at the UE based on the statistics and the application of the UE.

By including or configuring the communications manager 1020 in accordance with examples as described herein, the device 1005 (e.g., a processor controlling or otherwise coupled to the receiver 1010, the transmitter 1015, the communications manager 1020, or a combination thereof) may support techniques for reduced processing, reduced power consumption, and more efficient utilization of communication resources.

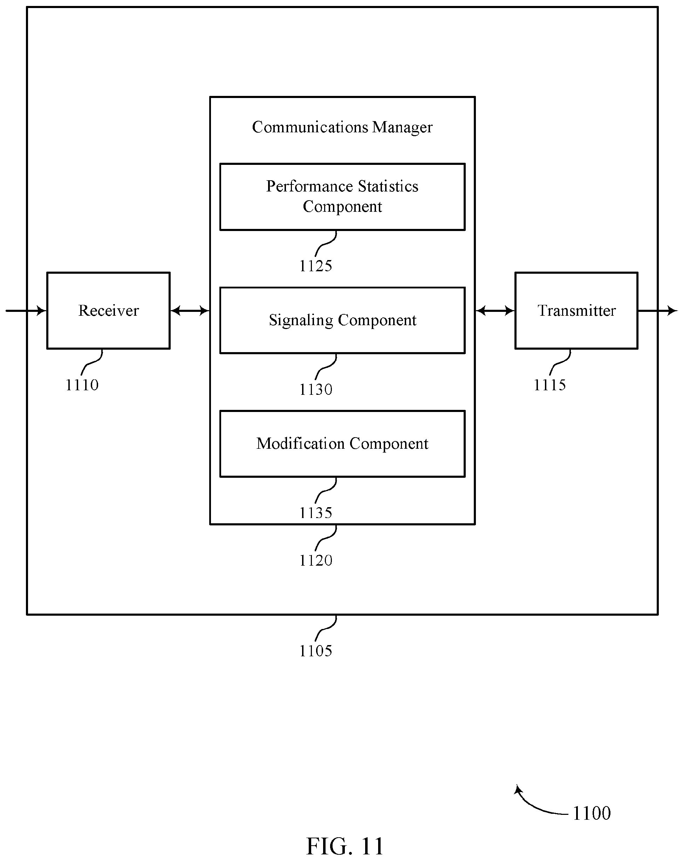

**FIG. 11** shows a block diagram 1100 of a device 1105 that supports deployment-based statistics for modifications to wireless communications in accordance with aspects of the present disclosure. The device 1105 may be an example of aspects of a device 1005 or a UE 115 as described herein. The device 1105 may include a receiver 1110, a transmitter 1115, and a communications manager 1120. The device 1105 may also include a processor. Each of these components may be in communication with one another (e.g., via one or more buses).

The receiver 1110 may provide a means for receiving information such as packets, user data, control information, or any combination thereof associated with various information channels (e.g., control channels, data channels, information channels related to deployment-based statistics for modifications to wireless communications). Information may be passed on to other components of the device 1105. The receiver 1110 may utilize a single antenna or a set of multiple antennas.

The transmitter 1115 may provide a means for transmitting signals generated by other components of the device 1105. For example, the transmitter 1115 may transmit information such as packets, user data, control information, or any combination thereof associated with various information channels (e.g., control channels, data channels, information channels related to deployment-based statistics for modifications to wireless communications). In some examples, the transmitter 1115 may be co-located with a receiver 1110 in a transceiver module. The transmitter 1115 may utilize a single antenna or a set of multiple antennas.

The device 1105, or various components thereof, may be an example of means for performing various aspects of deployment-based statistics for modifications to wireless communications as described herein. For example, the communications manager 1120 may include a performance statistics component 1125, a signaling component 1130, a modification component 1135, or any combination thereof. The communications manager 1120 may be an example of aspects of a communications manager 1020 as described herein. In some examples, the communications manager 1120, or various components thereof, may be configured to perform various operations (e.g., receiving, monitoring, transmitting) using or otherwise in cooperation with the receiver 1110, the transmitter 1115, or both. For example, the communications manager 1120 may receive information from the receiver 1110, send information to the transmitter 1115, or be integrated in combination with the receiver 1110, the transmitter 1115, or both to receive information, transmit information, or perform various other operations as described herein.

The communications manager 1120 may support wireless communication at a UE in accordance with examples as disclosed herein. The performance statistics component 1125 may be configured as or otherwise support a means for obtaining, from a modem of the UE, statistics associated with a deployment of the UE in a system supporting at least a first RAT, the statistics associated with a service provided from at least the first RAT, and the provided service based on the deployment of the UE. The signaling component 1130 may be configured as or otherwise support a means for signaling, to an application of the UE, information associated with the statistics. The modification component 1135 may be configured as or otherwise support a means for modifying communications at the UE based on the statistics and the application of the UE.

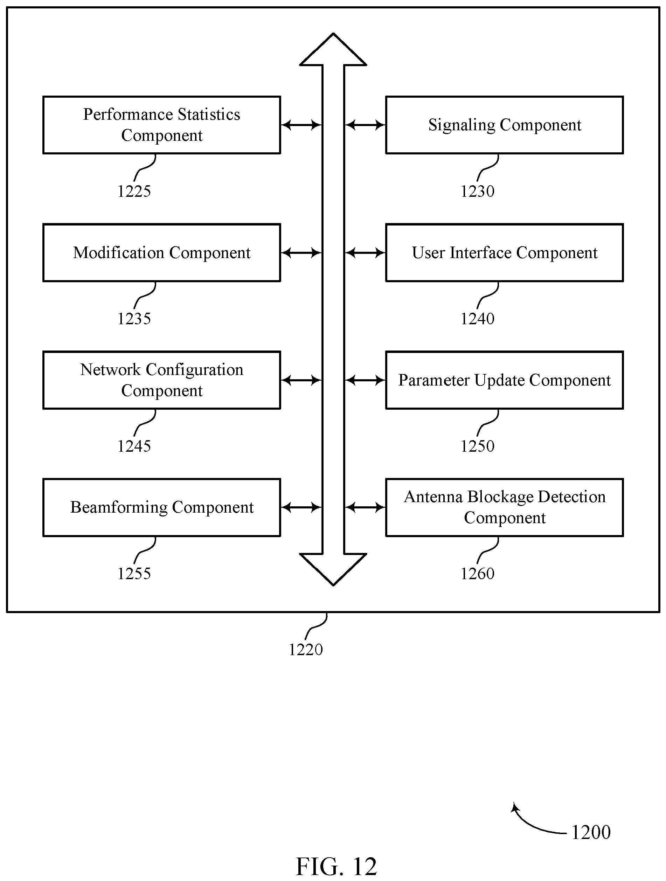

**FIG. 12** shows a block diagram 1200 of a communications manager 1220 that supports deployment-based statistics for modifications to wireless communications in accordance with aspects of the present disclosure. The communications manager 1220 may be an example of aspects of a communications manager 1020, a communications manager 1120, or both, as described herein. The communications manager 1220, or various components thereof, may be an example of means for performing various aspects of deployment-based statistics for modifications to wireless communications as described herein. For example, the communications manager 1220 may include a performance statistics component 1225, a signaling component 1230, a modification component 1235, a user interface component 1240, a network configuration component 1245, a parameter update component 1250, a beamforming component 1255, an antenna blockage detection component 1260, or any combination thereof. Each of these components may communicate, directly or indirectly, with one another (e.g., via one or more buses).

The communications manager 1220 may support wireless communication at a UE in accordance with examples as disclosed herein. The performance statistics component 1225 may be configured as or otherwise support a means for obtaining, from a modem of the UE, statistics associated with a deployment of the UE in a system supporting at least a first RAT, the statistics associated with a service provided from at least the first RAT, and the provided service based on the deployment of the UE. The signaling component 1230 may be configured as or otherwise support a means for signaling, to an application of the UE, information associated with the statistics. The modification component 1235 may be configured as or otherwise support a means for modifying communications at the UE based on the statistics and the application of the UE.

In some examples, the user interface component 1240 may be configured as or otherwise support a means for receiving, via an interface of the UE, an indication of a type of user of the UE. In some examples, the user interface component 1240 may be configured as or otherwise support a means for presenting, to the user via the interface, a subset of the information associated with the statistics based on the type of the user.

In some examples, to support presenting the subset of the information, the user interface component 1240 may be configured as or otherwise support a means for presenting a duration of the service provided from the first RAT, a quantity of service interruptions associated with the service provided from the first RAT, a battery usage associated with the service provided from the first RAT, an indication of an antenna blockage at the UE, or any combination thereof.

In some examples, the user interface component 1240 may be configured as or otherwise support a means for presenting, to the user via the interface, a selection option between two or more communication modes of the UE based on the subset of the information. In some examples, the user interface component 1240 may be configured as or otherwise support a means for receiving, from the user via the interface, an indication of a selection between the two or more communication modes, where modifying the communications at the UE is based on receiving the indication of the selection.

In some examples, the two or more communication modes include a standalone communication mode and a non-standalone communication mode, or a first RAT mode and a second RAT mode, or a communication mode associated with a first radio frequency band and a communication mode associated with a second radio frequency band, or any combination thereof.

In some examples, the user interface component 1240 may be configured as or otherwise support a means for presenting, to the user via the interface, a recommendation associated with the antenna blockage at the UE. In some examples, the beamforming component 1255 may be configured as or otherwise support a means for increasing a quantity of spatial layers for one or both of transmission and reception based on the recommendation, where modifying the communications at the UE is based on increasing the quantity of spatial layers.

In some examples, the recommendation includes an indication for the user to remove a case from the UE or to change a hand position on the UE.

In some examples, the antenna blockage detection component 1260 may be configured as or otherwise support a means for detecting the antenna blockage at the UE based on one or both of the UE using below a threshold quantity of spatial layers for a threshold time duration and detecting a threshold quantity of service interruptions during a time window associated with a channel condition satisfying a threshold channel condition.

In some examples, to support presenting the subset of the information, the user interface component 1240 may be configured as or otherwise support a means for presenting cell-level information, beam-level information, MIMO configuration information, carrier aggregation information, bandwidth information, battery usage information, or any combination thereof.

In some examples, the user interface component 1240 may be configured as or otherwise support a means for presenting, to the user via the interface, a selection option between different cells or beams based on the subset of the information. In some examples, the user interface component 1240 may be configured as or otherwise support a means for receiving, from the user via the interface of the UE, an indication of a selection between the different cells or beams, where modifying the communications at the UE is based on receiving the indication of the selection.

In some examples, the user interface component 1240 may be configured as or otherwise support a means for presenting, to the user via the interface of the UE, a selection option between different MIMO configurations based on the subset of the information. In some examples, the user interface component 1240 may be configured as or otherwise support a means for receiving, from the user via the interface of the UE, an indication of a selection between the different MIMO configurations, where modifying the communications at the UE is based on receiving the indication of the selection.

In some examples, the user interface component 1240 may be configured as or otherwise support a means for presenting, to the user via the interface of the UE, an option to overwrite a network parameter based on the subset of the information. In some examples, the user interface component 1240 may be configured as or otherwise support a means for receiving, from the user via the interface of the UE, a new value for the network parameter, where modifying the communications at the UE is based on receiving the new value for the network parameter.

In some examples, the network configuration component 1245 may be configured as or otherwise support a means for receiving, from a network entity, one or more network parameters. In some examples, the parameter update component 1250 may be configured as or otherwise support a means for updating, for the application of the UE, a value for at least one of the one or more network parameters based on the information associated with the statistics and the application of the UE, where modifying the communications at the UE is based on updating the value for the at least one of the one or more network parameters.

In some examples, updating the value for the at least one of the one or more network parameters is further based on one or both of an activity mode of the application and a traffic activity of the application.

In some examples, the one or more network parameters include PDP or RLC AM parameters.

In some examples, the performance statistics component 1225 may be configured as or otherwise support a means for detecting, at the application of the UE, a correlation between the statistics and a software build of the UE based on the information associated with the statistics. In some examples, the signaling component 1230 may be configured as or otherwise support a means for signaling an indication of the correlation.

In some examples, to support detecting the correlation, the performance statistics component 1225 may be configured as or otherwise support a means for detecting a pattern of statistics that fail to satisfy one or more performance thresholds during time windows associated with a channel condition that satisfies a threshold channel condition and correlating the pattern with the software build of the UE.

In some examples, to support signaling the indication of the correlation, the user interface component 1240 may be configured as or otherwise support a means for presenting, to a user of the UE via an interface of the UE, the indication of the correlation. In some examples, to support signaling the indication of the correlation, the signaling component 1230 may be configured as or otherwise support a means for transmitting, to a network entity, the indication of the correlation.

In some examples, the performance statistics component 1225 may be configured as or otherwise support a means for building the information at a higher layer of the UE relative to a layer associated with the modem of the UE, where signaling the information associated with the statistics to the application of the UE is based on building the information at the higher layer of the UE.

In some examples, the first RAT includes a 5G RAT and the provided service is associated with a 5G service.

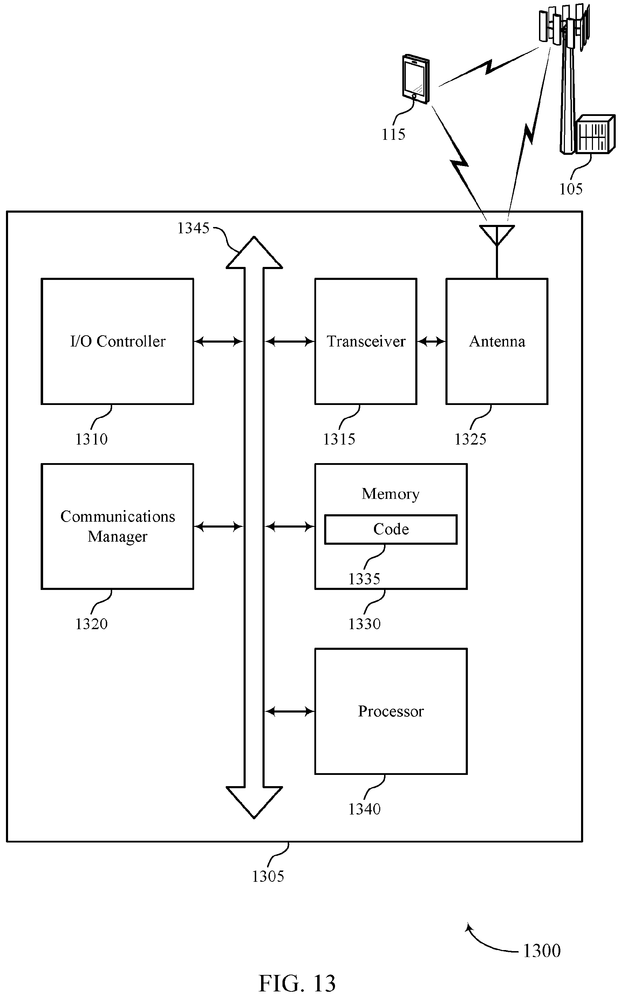

**FIG. 13** shows a diagram of a system 1300 including a device 1305 that supports deployment-based statistics for modifications to wireless communications in accordance with aspects of the present disclosure. The device 1305 may be an example of or include the components of a device 1005, a device 1105, or a UE 115 as described herein. The device 1305 may communicate wirelessly with one or more base stations 105, UEs 115, or any combination thereof. The device 1305 may include components for bi-directional voice and data communications including components for transmitting and receiving communications, such as a communications manager 1320, an I/O controller 1310, a transceiver 1315, an antenna 1325, a memory 1330, code 1335, and a processor 1340. These components may be in electronic communication or otherwise coupled (e.g., operatively, communicatively, functionally, electronically, electrically) via one or more buses (e.g., a bus 1345).

The I/O controller 1310 may manage input and output signals for the device 1305. The I/O controller 1310 may also manage peripherals not integrated into the device 1305. In some cases, the I/O controller 1310 may represent a physical connection or port to an external peripheral. In some cases, the I/O controller 1310 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 1310 may represent or interact with a modem, a keyboard, a mouse, a touchscreen, or a similar device. In some cases, the I/O controller 1310 may be implemented as part of a processor, such as the processor 1340. In some cases, a user may interact with the device 1305 via the I/O controller 1310 or via hardware components controlled by the I/O controller 1310.

In some cases, the device 1305 may include a single antenna 1325. However, in some other cases, the device 1305 may have more than one antenna 1325, which may be capable of concurrently transmitting or receiving multiple wireless transmissions. The transceiver 1315 may communicate bi-directionally, via the one or more antennas 1325, wired, or wireless links as described herein. For example, the transceiver 1315 may represent a wireless transceiver and may communicate bi-directionally with another wireless transceiver. The transceiver 1315 may also include a modem to modulate the packets, to provide the modulated packets to one or more antennas 1325 for transmission, and to demodulate packets received from the one or more antennas 1325. The transceiver 1315, or the transceiver 1315 and one or more antennas 1325, may be an example of a transmitter 1015, a transmitter 1115, a receiver 1010, a receiver 1110, or any combination thereof or component thereof, as described herein.

The memory 1330 may include random access memory (RAM) and read-only memory (ROM). The memory 1330 may store computer-readable, computer-executable code 1335 including instructions that, when executed by the processor 1340, cause the device 1305 to perform various functions described herein. The code 1335 may be stored in a non-transitory computer-readable medium such as system memory or another type of memory. In some cases, the code 1335 may not be directly executable by the processor 1340 but may cause a computer (e.g., when compiled and executed) to perform functions described herein. In some cases, the memory 1330 may contain, among other things, a basic I/O system (BIOS) which may control basic hardware or software operation such as the interaction with peripheral components or devices.

The processor 1340 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1340 may be configured to operate a memory array using a memory controller. In some other cases, a memory controller may be integrated into the processor 1340. The processor 1340 may be configured to execute computer-readable instructions stored in a memory (e.g., the memory 1330) to cause the device 1305 to perform various functions (e.g., functions or tasks supporting deployment-based statistics for modifications to wireless communications). For example, the device 1305 or a component of the device 1305 may include a processor 1340 and memory 1330 coupled with or to the processor 1340, the processor 1340 and memory 1330 configured to perform various functions described herein.

The communications manager 1320 may support wireless communication at a UE in accordance with examples as disclosed herein. For example, the communications manager 1320 may be configured as or otherwise support a means for obtaining, from a modem of the UE, statistics associated with a deployment of the UE in a system supporting at least a first RAT, the statistics associated with a service provided from at least the first RAT, and the provided service based on the deployment of the UE. The communications manager 1320 may be configured as or otherwise support a means for signaling, to an application of the UE, information associated with the statistics. The communications manager 1320 may be configured as or otherwise support a means for modifying communications at the UE based on the statistics and the application of the UE.

By including or configuring the communications manager 1320 in accordance with examples as described herein, the device 1305 may support techniques for improved communication reliability, reduced latency, improved user experience related to reduced processing, reduced power consumption, more efficient utilization of communication resources, improved coordination between devices, longer battery life, and improved utilization of processing capability.

In some examples, the communications manager 1320 may be configured to perform various operations (e.g., receiving, monitoring, transmitting) using or otherwise in cooperation with the transceiver 1315, the one or more antennas 1325, or any combination thereof. Although the communications manager 1320 is illustrated as a separate component, in some examples, one or more functions described with reference to the communications manager 1320 may be supported by or performed by the processor 1340, the memory 1330, the code 1335, or any combination thereof. For example, the code 1335 may include instructions executable by the processor 1340 to cause the device 1305 to perform various aspects of deployment-based statistics for modifications to wireless communications as described herein, or the processor 1340 and the memory 1330 may be otherwise configured to perform or support such operations.

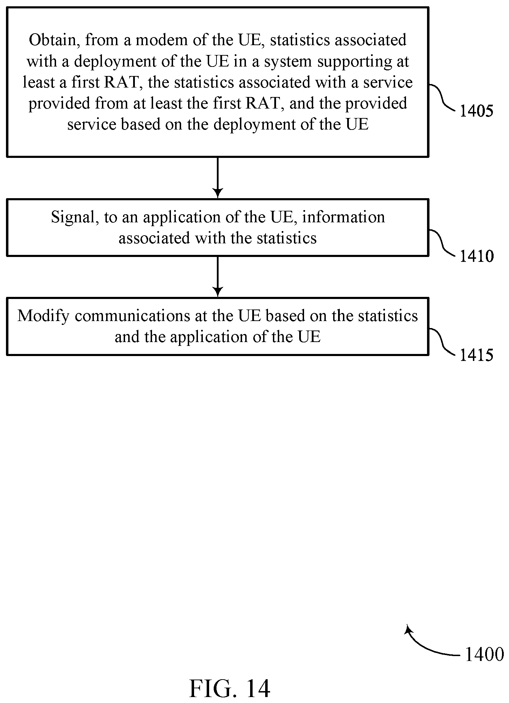

**FIG. 14** shows a flowchart illustrating a method 1400 that supports deployment-based statistics for modifications to wireless communications in accordance with aspects of the present disclosure. The operations of the method 1400 may be implemented by a UE or its components as described herein. For example, the operations of the method 1400 may be performed by a UE 115 as described with reference to FIGs. 1 through 13. In some examples, a UE may execute a set of instructions to control the functional elements of the UE to perform the described functions. Additionally or alternatively, the UE may perform aspects of the described functions using special-purpose hardware.

At 1405, the method may include obtaining, from a modem of the UE, statistics associated with a deployment of the UE in a system supporting at least a first RAT, the statistics associated with a service provided from at least the first RAT, and the provided service based on the deployment of the UE. The operations of 1405 may be performed in accordance with examples as disclosed herein. In some examples, aspects of the operations of 1405 may be performed by a performance statistics component 1225 as described with reference to FIG. 12.

At 1410, the method may include signaling, to an application of the UE, information associated with the statistics. The operations of 1410 may be performed in accordance with examples as disclosed herein. In some examples, aspects of the operations of 1410 may be performed by a signaling component 1230 as described with reference to FIG. 12.

At 1415, the method may include modifying communications at the UE based on the statistics and the application of the UE. The operations of 1415 may be performed in accordance with examples as disclosed herein. In some examples, aspects of the operations of 1415 may be performed by a modification component 1235 as described with reference to FIG. 12.

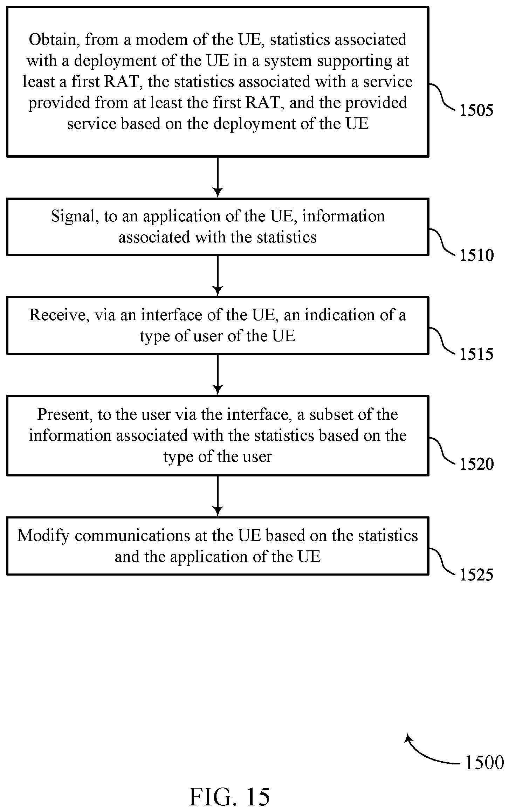

**FIG. 15** shows a flowchart illustrating a method 1500 that supports deployment-based statistics for modifications to wireless communications in accordance with aspects of the present disclosure. The operations of the method 1500 may be implemented by a UE or its components as described herein. For example, the operations of the method 1500 may be performed by a UE 115 as described with reference to FIGs. 1 through 13. In some examples, a UE may execute a set of instructions to control the functional elements of the UE to perform the described functions. Additionally or alternatively, the UE may perform aspects of the described functions using special-purpose hardware.

At 1505, the method may include obtaining, from a modem of the UE, statistics associated with a deployment of the UE in a system supporting at least a first RAT, the statistics associated with a service provided from at least the first RAT, and the provided service based on the deployment of the UE. The operations of 1505 may be performed in accordance with examples as disclosed herein. In some examples, aspects of the operations of 1505 may be performed by a performance statistics component 1225 as described with reference to FIG. 12.

At 1510, the method may include signaling, to an application of the UE, information associated with the statistics. The operations of 1510 may be performed in accordance with examples as disclosed herein. In some examples, aspects of the operations of 1510 may be performed by a signaling component 1230 as described with reference to FIG. 12.

At 1515, the method may include receiving, via an interface of the UE, an indication of a type of user of the UE. The operations of 1515 may be performed in accordance with examples as disclosed herein. In some examples, aspects of the operations of 1515 may be performed by a user interface component 1240 as described with reference to FIG. 12.

At 1520, the method may include presenting, to the user via the interface, a subset of the information associated with the statistics based on the type of the user. The operations of 1520 may be performed in accordance with examples as disclosed herein. In some examples, aspects of the operations of 1520 may be performed by a user interface component 1240 as described with reference to FIG. 12.

At 1525, the method may include modifying communications at the UE based on the statistics and the application of the UE. The operations of 1525 may be performed in accordance with examples as disclosed herein. In some examples, aspects of the operations of 1525 may be performed by a modification component 1235 as described with reference to FIG. 12.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

## Claims

1. A method for wireless communication at a user equipment, UE (115), comprising:
obtaining (1405, 1505), from a modem of the UE, statistics associated with a deployment of the UE in a system supporting at least a first radio access technology, the statistics associated with a service provided from at least the first radio access technology, and the provided service based at least in part on the deployment of the UE;
signaling (1410, 1510), to an application of the UE, information associated with the statistics;
receiving (1515), via an interface of the UE, an indication of a type of user of the UE;
presenting (1520), to the user via the interface, a subset of the information associated with the statistics, wherein the subset of information is based at least in part on the type of the user, wherein, when the user comprises a first type, presenting the subset of information comprises
presenting an indication of an antenna blockage at the UE,
presenting, to the user via the interface, a recommendation associated with the antenna blockage at the UE;
increasing a quantity of spatial layers for one or both of transmission and reception based at least in part on the recommendation; and
modifying (1415, 1525) communications at the UE based at least in part on the statistics and the application of the UE, wherein modifying the communications at the UE is based at least in part on increasing the quantity of spatial layers.

2. The method of claim 1, wherein the type of the user comprises a first type, and wherein presenting the subset of the information comprises:
presenting a duration of the service provided from the first radio access technology, a quantity of service interruptions associated with the service provided from the first radio access technology, a battery usage associated with the service provided from the first radio access technology, , or any combination thereof.

3. The method of claim 2, further comprising:
presenting, to the user via the interface, a selection option between two or more communication modes of the UE based at least in part on the subset of the information; and
receiving, from the user via the interface, an indication of a selection between the two or more communication modes, wherein modifying the communications at the UE is based at least in part on receiving the indication of the selection.

4. The method of claim 3, wherein the two or more communication modes comprise a standalone communication mode and a non-standalone communication mode, or a first radio access technology mode and a second radio access technology mode, or a communication mode associated with a first radio frequency band and a communication mode associated with a second radio frequency band, or any combination thereof.

5. The method of claim 1, wherein the recommendation comprises an indication for the user to remove a case from the UE or to change a hand position on the UE.

6. The method of claim2, further comprising:
detecting the antenna blockage at the UE based at least in part on one or both of the UE using below a threshold quantity of spatial layers for a threshold time duration and detecting a threshold quantity of service interruptions during a time window associated with a channel condition satisfying a threshold channel condition.

7. The method of claim 1, wherein the type of the user comprises a second type, and wherein presenting the subset of the information comprises:
presenting cell-level information, beam-level information, multiple-input multiple-output, MIMO configuration information, carrier aggregation information, bandwidth information, battery usage information, or any combination thereof.

8. The method of claim 7, further comprising:
presenting, to the user via the interface, a selection option between different cells or beams based at least in part on the subset of the information; and
receiving, from the user via the interface of the UE, an indication of a selection between the different cells or beams, wherein modifying the communications at the UE is based at least in part on receiving the indication of the selection.

9. The method of claim 7, further comprising:
presenting, to the user via the interface of the UE, a selection option between different MIMO configurations based at least in part on the subset of the information; and
receiving, from the user via the interface of the UE, an indication of a selection between the different MIMO configurations, wherein modifying the communications at the UE is based at least in part on receiving the indication of the selection.

10. The method of claim 7, further comprising:
presenting, to the user via the interface of the UE, an option to overwrite a network parameter based at least in part on the subset of the information; and
receiving, from the user via the interface of the UE, a new value for the network parameter, wherein modifying the communications at the UE is based at least in part on receiving the new value for the network parameter.

11. The method of claim 1, wherein the first radio access technology comprises a Fifth Generation, 5G radio access technology and the provided service is associated with a 5G service.

12. A user equipment, UE, comprising:
a processor;
memory coupled with the processor; and
instructions stored in the memory and executable by the processor to cause the apparatus to:
implement the method according to any of claims 1 to 11.

## Patentansprüche

1. Ein Verfahren zur drahtlosen Kommunikation an einem Benutzergerät, UE, (115), das Folgendes aufweist:
Einholen (1405, 1505) einer einem Einsatz des UE in einem System, das zumindest eine erste Funkzugriffstechnologie unterstützt, zugeordneten Statistik von einem Modem des UE, wobei die Statistik einem von zumindest der ersten Funkzugriffstechnologie bereitgestellten Dienst zugeordnet ist, und wobei der bereitgestellte Dienst zumindest teilweise auf dem Einsatz des UE basiert;
Signalisieren (1410, 1510) von der Statistik zugeordneten Informationen an eine Anwendung des UE;
Empfangen (1515) einer Angabe eines Typs von Benutzer des UE über eine Schnittstelle des UE;
Aufzeigen (1520) eines Untersatzes der der Statistik zugeordneten Informationen gegenüber dem Benutzer über die Schnittstelle, wobei der Untersatz von Informationen zumindest teilweise auf dem Typ des Benutzers basiert, wobei, wenn der Benutzer einen ersten Typ aufweist, das Aufzeigen des Untersatzes von Informationen Folgendes aufweist:
Aufzeigen einer Angabe einer Antennenblockierung an dem UE,
Aufzeigen einer der Antennenblockierung an dem UE zugeordneten Empfehlung gegenüber dem Benutzer über die Schnittstelle; und
Erhöhen einer Anzahl an räumlichen Ebenen für eines unter einer Übermittlung und einem Empfang oder beide zumindest teilweise basierend auf der Empfehlung; und
Modifizieren (1415, 1525) von Kommunikationen an dem UE zumindest teilweise basierend auf der Statistik und der Anwendung des UE, wobei das Modifizieren der Kommunikationen an dem UE zumindest teilweise auf der Erhöhung der Anzahl an räumlichen Ebenen basiert.

2. Verfahren nach Anspruch 1, wobei der Typ des Benutzers einen ersten Typ aufweist und wobei das Aufzeigen des Untersatzes der Informationen Folgendes aufweist:
Aufzeigen einer Dauer des von der ersten Funkzugriffstechnologie bereitgestellten Dienstes, einer Anzahl an dem von der ersten Funkzugriffstechnologie bereitgestellten Dienst zugeordneten Dienstunterbrechungen, einer dem von der ersten Funkzugriffstechnologie bereitgestellten Dienst zugeordneten Akkumulatornutzung oder einer Kombination dieser.

3. Verfahren nach Anspruch 2, das ferner Folgendes aufweist:
Aufzeigen einer Auswahloption zwischen zwei oder mehr Kommunikationsmodi des UE gegenüber dem Benutzer über die Schnittstelle zumindest teilweise basierend auf dem Untersatz der Informationen; und
Empfangen einer Angabe einer Auswahl zwischen den zwei oder mehr Kommunikationsmodi von dem Benutzer über die Schnittstelle, wobei das Modifizieren der Kommunikationen an dem UE zumindest teilweise auf dem Empfang der Angabe der Auswahl basiert.

4. Verfahren nach Anspruch 3, wobei die zwei oder mehr Kommunikationsmodi einen Einzelkommunikationsmodus und einen Nicht-Einzelkommunikationsmodus oder einen ersten Funkzugriffstechnologie-Modus und einen zweiten Funkzugriffstechnologie-Modus oder einen einem ersten Funkfrequenzband zugeordneten Kommunikationsmodus und einen einem zweiten Funkfrequenzband zugeordneten Kommunikationsmodus oder jede Kombination dieser aufweisen.

5. Verfahren nach Anspruch 1, wobei die Empfehlung eine Angabe für den Benutzer aufweist, ein Gehäuse von dem UE zu entfernen oder eine Handposition auf dem UE zu verändern.

6. Verfahren nach Anspruch 2, das ferner Folgendes aufweist:
Erfassen der Antennenblockierung an dem UE zumindest teilweise basierend auf einem oder beidem unter einer Nutzung von weniger als einer Schwellenanzahl an räumlichen Ebenen über eine Schwellenzeitdauer durch das UE und der Erfassung einer Schwellenanzahl an Dienstunterbrechungen während eines der Erfüllung eines Schwellenkanalzustands durch einen Kanalzustand zugeordneten Zeitfensters.

7. Verfahren nach Anspruch 1, wobei der Typ des Benutzers einen zweiten Typ aufweist und wobei das Aufzeigen des Untersatzes der Informationen Folgendes aufweist:
Aufzeigen von Informationen auf Zellenebene, Informationen auf Strahlebene, Mehrfacheingangs-Mehrfachausgangs-Konfigurationsinformationen, MIMO-Konfigurationsinformationen, Trägeraggregationsinformationen, Bandbreiteninformationen, Akkumulatornutzungsinformationen oder jede Kombination dieser.

8. Verfahren nach Anspruch 7, das ferner Folgendes aufweist:
Aufzeigen einer Auswahloption zwischen unterschiedlichen Zellen oder Strahlen gegenüber dem Benutzer über die Schnittstelle zumindest teilweise basierend auf dem Untersatz der Informationen; und
Empfangen einer Angabe einer Auswahl zwischen den unterschiedlichen Zellen oder Strahlen von dem Benutzer über die Schnittstelle, wobei das Modifizieren der Kommunikationen an dem UE zumindest teilweise auf dem Empfang der Angabe der Auswahl basiert.

9. Verfahren nach Anspruch 7, das ferner Folgendes aufweist:
Aufzeigen einer Auswahloption zwischen unterschiedlichen MIMO-Konfigurationen gegenüber dem Benutzer über die Schnittstelle des UE zumindest teilweise basierend auf dem Untersatz der Informationen; und
Empfangen einer Angabe einer Auswahl zwischen den unterschiedlichen MIMO-Konfigurationen von dem Benutzer über die Schnittstelle des UE, wobei das Modifizieren der Kommunikationen an dem UE zumindest teilweise auf dem Empfang der Angabe der Auswahl basiert.

10. Verfahren nach Anspruch 7, das ferner Folgendes aufweist:
Aufzeigen einer Option, einen Netzwerkparameter zu überschreiben, gegenüber dem Benutzer über die Schnittstelle des UE zumindest teilweise basierend auf dem Untersatz der Informationen; und
Empfangen eines neuen Werts für den Netzwerkparameter von dem Benutzer über die Schnittstelle des UE, wobei das Modifizieren der Kommunikationen an dem UE zumindest teilweise auf dem Empfang des neuen Werts für den Netzwerkparameter basiert.

11. Verfahren nach Anspruch 1, wobei die erste Funkzugriffstechnologie eine Funkzugriffstechnologie der fünften Generation, 5G-Funkzugriffstechnologie, aufweist und der bereitgestellte Dienst einem 5G-Dienst zugeordnet ist.

12. Ein Benutzergerät, UE, das Folgendes aufweist:
einen Prozessor;
einen mit dem Prozessor gekoppelten Speicher; und
in dem Speicher gespeicherten und von dem Prozessor ausführbare Anweisungen zum Veranlassen der Vorrichtung zu Folgendem:
Implementieren des Verfahrens nach einem der Ansprüche 1 bis 11.

## Revendications

1. Procédé de communication sans fil au niveau d'un équipement d'utilisateur, UE (115), comprenant :
l'obtention (1405, 1505), à partir d'un modem de l'UE, de statistiques associées à un déploiement de l'UE dans un système prenant en charge au moins une première technologie d'accès radio, les statistiques étant associées à un service fourni à partir d'au moins la première technologie d'accès radio, et le service fourni étant basé au moins en partie sur le déploiement de l'UE ;
la signalisation (1410, 1510), à une application de l'UE, d'informations associées aux statistiques ;
la réception (1515), via une interface de l'UE, d'une indication d'un type d'utilisateur de l'UE ;
la présentation (1520), à l'utilisateur via l'interface, d'un sous-ensemble des informations associées aux statistiques, ledit sous-ensemble d'informations étant basé au moins en partie sur le type d'utilisateur ; dans lequel lorsque l'utilisateur correspond à un premier type, la présentation du sous-ensemble d'informations comprend :
la présentation d'une indication d'un blocage d'antenne au niveau de l'UE ;
la présentation, à l'utilisateur via l'interface, d'une recommandation associée au blocage d'antenne au niveau de l'UE ;
l'augmentation d'un nombre de couches spatiales pour l'émission et/ou la réception, sur la base au moins en partie de la recommandation ; et
la modification (1415, 1525) des communications au niveau de l'UE sur la base au moins en partie des statistiques et de l'application de l'UE, la modification des communications au niveau de l'UE étant basée au moins en partie sur l'augmentation du nombre de couches spatiales.

2. Procédé selon la revendication 1, dans lequel le type d'utilisateur comprend un premier type, et dans lequel la présentation du sous-ensemble d'informations comprend :
la présentation d'une durée du service fourni à partir de la première technologie d'accès radio, d'un nombre d'interruptions de service associées au service fourni à partir de la première technologie d'accès radio, d'une utilisation de la batterie associée au service fourni à partir de la première technologie d'accès radio, ou de toute combinaison de ces éléments.

3. Procédé selon la revendication 2, comprenant en outre :
la présentation à l'utilisateur, via l'interface, d'une option de sélection entre deux modes de communication de l'UE ou plus, sur la base, au moins en partie, du sous-ensemble d'informations ; et
la réception, de la part de l'utilisateur via l'interface, d'une indication d'une sélection entre les deux modes de communication ou plus, la modification des communications au niveau de l'UE étant basée, au moins en partie, sur la réception de l'indication de la sélection.

4. Procédé selon la revendication 3, dans lequel les deux modes de communication ou plus comprennent un mode de communication autonome et un mode de communication non autonome, ou un mode de première technologie d'accès radio et un mode de deuxième technologie d'accès radio, ou un mode de communication associé à une première bande de fréquences radio et un mode de communication associé à une deuxième bande de fréquences radio, ou toute combinaison de ceux-ci.

5. Procédé selon la revendication 1, dans lequel la recommandation comprend une indication demandant à l'utilisateur de retirer un étui de l'UE ou de modifier la position de sa main sur l'UE.

6. Procédé selon la revendication 2, comprenant en outre :
la détection du blocage d'antenne au niveau de l'UE sur la base, au moins en partie, de l'un des éléments suivants, ou des deux :
l'utilisation par l'UE d'un nombre de couches spatiales inférieur à un seuil pendant une durée seuil ; et
la détection d'un nombre seuil d'interruptions de service au cours d'une fenêtre temporelle associée à un état de canal satisfaisant à un état de canal seuil.

7. Procédé selon la revendication 1, dans lequel le type d'utilisateur comprend un deuxième type, et dans lequel la présentation du sous-ensemble d'informations comprend :
la présentation d'informations au niveau de la cellule, d'informations au niveau du faisceau, d'informations sur la configuration entrés multiples-sorties multiples, MIMO, d'informations sur l'agrégation de porteuses, d'informations sur la bande passante, d'informations sur l'utilisation de la batterie, ou de toute combinaison de ces informations.

8. Procédé selon la revendication 7, comprenant en outre :
la présentation à l'utilisateur, via l'interface, d'une option de sélection entre différentes cellules ou différents faisceaux, sur la base, au moins en partie, du sous-ensemble d'informations ; et
la réception, de la part de l'utilisateur via l'interface de l'UE, d'une indication d'une sélection entre les différentes cellules ou les différents faisceaux, la modification des communications au niveau de l'UE étant basée, au moins en partie, sur la réception de l'indication de la sélection.

9. Procédé selon la revendication 7, comprenant en outre :
la présentation à l'utilisateur, via l'interface de l'UE, d'une option de sélection entre différentes configurations MIMO sur la base, au moins en partie, du sous-ensemble d'informations ; et
la réception, de la part de l'utilisateur via l'interface de l'UE, d'une indication d'une sélection entre les différentes configurations MIMO, la modification des communications au niveau de l'UE étant basée, au moins en partie, sur la réception de l'indication de la sélection.

10. Procédé selon la revendication 7, comprenant en outre :
la présentation à l'utilisateur, via l'interface de l'UE, d'une option permettant d'écraser un paramètre réseau sur la base, au moins en partie, du sous-ensemble d'informations ; et
la réception, de la part de l'utilisateur via l'interface de l'UE, d'une nouvelle valeur pour le paramètre réseau, la modification des communications au niveau de l'UE étant basée, au moins en partie, sur la réception de la nouvelle valeur pour le paramètre réseau.

11. Procédé selon la revendication 1, dans lequel la première technologie d'accès radio comprend une technologie d'accès radio de cinquième génération, 5G, et le service fourni est associé à un service 5G.

12. Un appareil pour la communication sans fil au niveau d'un équipement d'utilisateur, UE, comprenant :
un processeur ;
une mémoire couplée au processeur ; et
des instructions stockées dans la mémoire et exécutables par le processeur pour amener l'appareil à :
mettre en œuvre le procédé selon l'une quelconque des revendications 1 à 11.
